# EUROPEAN PATENT APPLICATION

(11) **EP 4 730 075 A1**
(43) Date of publication of application: **22.04.2026**
(21) Application number: 25731409.6
(22) Date of filing: 18.06.2025
(51) Int. Cl.: G06F 1/16

(54) **BUFFER MEMBER AND ELECTRONIC DEVICE COMPRISING SAME**

(30) Priority: 02.09.2024 KR 20240118724; 11.10.2024 KR 20240138800
(71) Applicant: Samsung Electronics Co., Ltd, Suwon-si, Gyeonggi-do 16677 (KR)
(72) Inventor: CHOI, Junyoung, Suwon-si, Gyeonggi-do 16677 (KR); KIM, Jihoon, Suwon-si, Gyeonggi-do 16677 (KR); SONG, Minsuk, Suwon-si, Gyeonggi-do 16677 (KR); AHN, Jaeuk, Suwon-si, Gyeonggi-do 16677 (KR); JUNG, Soli, Suwon-si, Gyeonggi-do 16677 (KR); YOON, Byounguk, Suwon-si, Gyeonggi-do 16677 (KR); JUN, Jaeyoung, Suwon-si, Gyeonggi-do 16677 (KR); CHOI, Jinug, Suwon-si, Gyeonggi-do 16677 (KR)
(74) Representative: Appleyard Lees IP LLP
(86) International application number: PCT/KR2025/095431
(87) International publication number: WO 2026/049587

(57) **Abstract**

Disclosed is an electronic device comprising a multi-foldable housing comprising a first housing, a second housing, and a third housing, a first hinge structure rotatably connecting the first housing and the second housing, a second hinge structure rotatably connecting the second housing and the third housing, a flexible display disposed on a front surface of the first housing, the second housing, and the third housing, a protective member disposed on an edge area of the flexible display, a rear cover disposed on a rear surface of the first housing and forming an exterior of the electronic device, and an impact-absorbing member disposed on an edge area of the rear cover. When the rear cover and a portion of the flexible display are disposed to face each other, the impact-absorbing member disposed on the rear cover and the protective member disposed on the third housing are configured to contact each other.

## Description

### [Technical Field]

The disclosure relates to an impact-absorbing member and a multi-foldable electronic device including the same.

### [Background Art]

Advancements and developments in electronics, information, and communication technology give rise to integration of various functionalities into a single electronic device or portable communication device. For example, smartphones include the functionalities of a sound player, photographing device, and scheduler, as well as the communication functionality and, on top of that, may implement more various functions by having applications installed thereon.

As smartphones or other personal/portable communication devices spread, users' demand for portability and use convenience is on the rise. For example, a touchscreen display may not only serve as an output device of visual information but also provide a virtual keyboard that replaces a mechanical input device (e.g., a button input device). As such, portable communication devices or electronic devices may be made compact while delivering further enhanced applicability (e.g., by including a larger screen). Flexible displays, e.g., foldable or rollable displays, deliver better portability and use convenience. However, in a folding operation of general electronic devices including multiple folding portions, the rear cover of one housing and the protective member of another housing may collide with each other, which can cause frictional noise and/or damage.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

An electronic device, according to an embodiment of the disclosure, may comprise a multi-foldable housing comprising a first housing, a second housing, and a third housing, a first hinge structure rotatably connecting the first housing and the second housing, a second hinge structure rotatably connecting the second housing and the third housing, a flexible display disposed on a front surface (or side) of the first housing, the second housing, and the third housing, a protective member disposed on an edge area of the flexible display, a rear cover disposed on a rear surface (or side) of the first housing and forming an exterior of the electronic device, and an impact-absorbing member disposed on an edge area of the rear cover. When the rear cover and a portion of the flexible display are disposed to face (e.g., oppose) each other, the impact-absorbing member disposed on the rear cover and the protective member disposed on the third housing may be configured to contact each other.

An electronic device according to an embodiment of the disclosure may comprise a multi-foldable housing including a first housing, a second housing, and a third housing, a first hinge structure disposed between the first housing and the second housing to rotatably connect the first housing and the second housing, a second hinge structure disposed between the second housing and the third housing to rotatably connect the second housing and the third housing, a flexible display on a front surface (or side) of the first housing, the second housing, and the third housing, a protective member disposed on an edge area of the flexible display, a rear cover disposed on a rear surface (or side) of the first housing and forming an exterior of the electronic device, and an impact-absorbing member disposed adjacent to an edge portion of the rear cover. When the rear cover and a portion of the flexible display are disposed to face (e.g., oppose) each other, the rear cover and the protective member may be configured to contact each other by the impact-absorbing member.

An electronic device according to an embodiment of the disclosure may comprise a multi-foldable housing comprising a first housing, a second housing, and a third housing, a first hinge structure disposed between the first housing and the second housing and rotatably connecting the first housing and the second housing, a second hinge structure disposed between the second housing and the third housing and rotatably connecting the second housing and the third housing, a flexible display disposed on a front surface (or side) of the first housing, the second housing, and the third housing, a protective member disposed on an edge area of the flexible display, a rear cover disposed on a rear surface (or side) of the first housing and forming an exterior of the electronic device, and an impact-absorbing member disposed adjacent to an edge portion of the rear cover. When the rear cover and a portion of the flexible display are disposed to face (e.g., oppose) each other, a portion of the rear cover and the protective member may be configured to contact each other.

### [Brief Description of Drawings]

The subject-matter of the present disclosure is best understood with reference to the accompanying figures, in which:
FIG. 1 is a block diagram illustrating an electronic device in a network environment according to an embodiment;
FIG. 2A is a front view and a side view illustrating an unfolded state of an electronic device according to an embodiment;
FIG. 2B is a rear view illustrating an unfolded state of an electronic device according to an embodiment;
FIG. 3A is a front perspective view illustrating an electronic device in a folded state according to an embodiment.
FIG. 3B is a rear perspective view illustrating an electronic device in a folded state according to an embodiment;
FIG. 3C is a top view illustrating a folded state of an electronic device according to an embodiment;
FIG. 3D is a see-through view illustrating a flexible display in a folded state of an electronic device according to an embodiment;
FIG. 4 is an exploded perspective view illustrating an electronic device according to an embodiment;
FIG. 5 is an exploded perspective view illustrating specific components mounted in an electronic device according to an embodiment;
FIG. 6 is a perspective view illustrating a rear cover and an impact-absorbing member of an electronic device according to an embodiment;
FIG. 7 is a perspective view illustrating a portion in a state in which a rear cover and an impact-absorbing member of an electronic device are coupled according to an embodiment;
FIG. 8 is a cross-sectional view illustrating a rear cover and an impact-absorbing member disposed on a first housing of an electronic device according to an embodiment;
FIG. 9 is a view illustrating a rear cover and an impact-absorbing member disposed on a first housing of an electronic device according to an embodiment;
FIG. 10 is a cross-sectional view taken along A-A' of the electronic device of FIG. 3A, and an enlarged view of an area S1 of the cross-sectional view according to an embodiment;
FIG. 11 is a cross-sectional view taken along B-B' of the electronic device of FIG. 3A, and an enlarged view of an area S2 of the cross-sectional view according to an embodiment;
FIG. 12A is a rear view illustrating an unfolded state of an electronic device according to an embodiment;
FIG. 12B is an enlarged view illustrating an area S3 of the electronic device of FIG. 12A according to an embodiment;
FIG. 12C is a cross-sectional view taken along A-A' of the electronic device of FIG. 3A, and an enlarged view of an area S4 of the cross-sectional view according to an embodiment;
FIG. 12D is a cross-sectional view taken along B-B' of the electronic device of FIG. 3A, and an enlarged view of an area S5 of the cross-sectional view according to an embodiment;
FIG. 13A is a rear view illustrating a portion of a first housing of an electronic device according to an embodiment;
FIG. 13B is an enlarged perspective view illustrating an edge portion of the first housing of FIG. 13A;
FIG. 13C is a cross-sectional view taken along A-A' of the electronic device of FIG. 3A, and an enlarged view of an area S6 of the cross-sectional view according to an embodiment;
FIG. 14A is a rear view illustrating an unfolded state of an electronic device according to an embodiment;
FIG. 14B is an enlarged perspective view illustrating an area of a rear cover and a rear surface of a first housing of the electronic device of FIG. 14A
FIG. 14C is a cross-sectional view taken along A-A' of the electronic device of FIG. 3A, and an enlarged view of an area S7 of the cross-sectional view; according to an embodiment;
FIG. 15A is an enlarged perspective view illustrating an area of a rear cover and a rear surface of a first housing of the electronic device of FIG. 14A according to an embodiment;
FIG. 15B is an enlarged view illustrating an area S8 of the cross-sectional view of FIG. 14C according to an embodiment;
FIG. 16A is an enlarged perspective view illustrating an area of a rear cover and a rear surface of a first housing of the electronic device of FIG. 14A according to an embodiment;
FIG. 16B is an enlarged view illustrating the rear cover corner area of FIG. 16A according to an embodiment;
FIG. 17A is a front view illustrating an unfolded state of an electronic device according to an embodiment;
FIG. 17B is a cross-sectional view taken along A-A' of the electronic device of FIG. 3A, and an enlarged view of an area S6 of the cross-sectional view according to an embodiment;
FIG. 18A is a front view illustrating an unfolded state of an electronic device according to an embodiment;
FIG. 18B is an enlarged view illustrating an area S7 of the electronic device of FIG. 18A according to an embodiment;
FIG. 18C is a perspective view illustrating an area S7 of the electronic device of FIG. 18A according to an embodiment;
FIG. 19A is an enlarged view illustrating an area S7 of the electronic device of FIG. 18A according to an embodiment;
FIG. 19B is a view illustrating a portion of the cross-sectional view taken along A-A' of the electronic device of FIG. 3A according to an embodiment;
FIG. 20 is a cross-sectional view taken along A-A' of the electronic device of FIG. 3A, and an enlarged view of an area S8 of the cross-sectional view according to an embodiment;
FIG. 21A is a front view illustrating an unfolded state of an electronic device according to an embodiment;
FIG. 21B is an enlarged cross-sectional view illustrating an area S9 and a front surface of a third housing of the electronic device of FIG. 21A according to an embodiment;
FIG. 21C is an enlarged cross-sectional view illustrating a portion of the electronic device of FIG. 21A in a folded state according to an embodiment;
FIG. 22A is an enlarged cross-sectional view illustrating a portion of the electronic device of FIG. 21A in a folded state;
FIG. 22B is an enlarged cross-sectional view illustrating a portion of the electronic device of FIG. 21A in a folded state according to an embodiment.

### [Mode for the Invention]

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

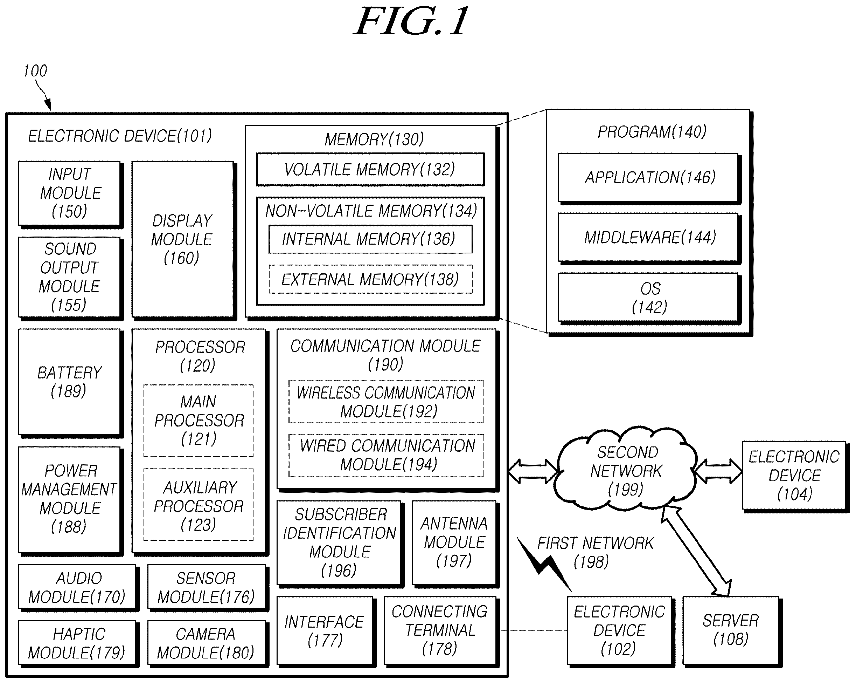

FIG. 1 is a block diagram illustrating an electronic device in a network environment according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

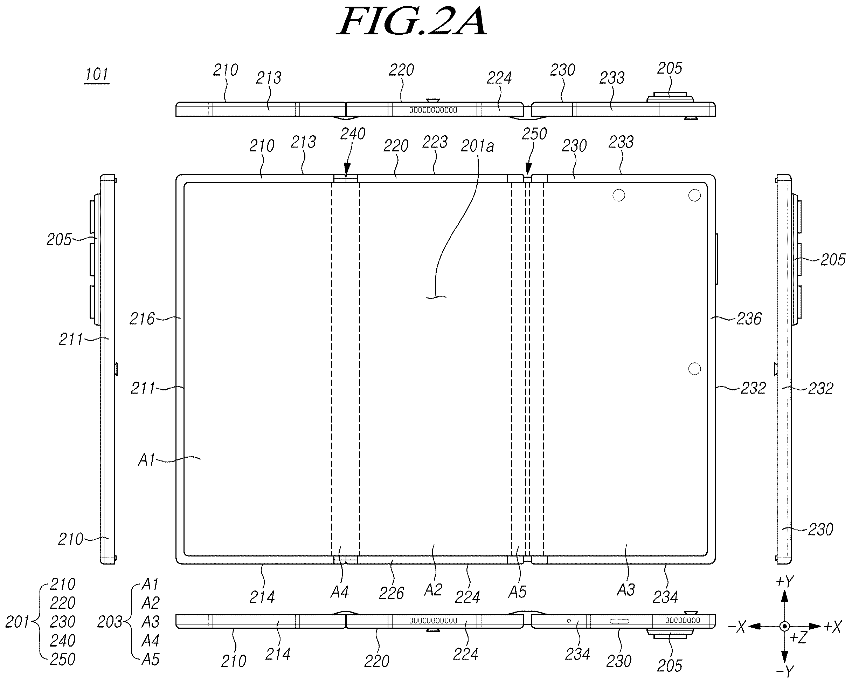

FIG. 2A is a front view and a side view illustrating an unfolded state of an electronic device according to an embodiment.

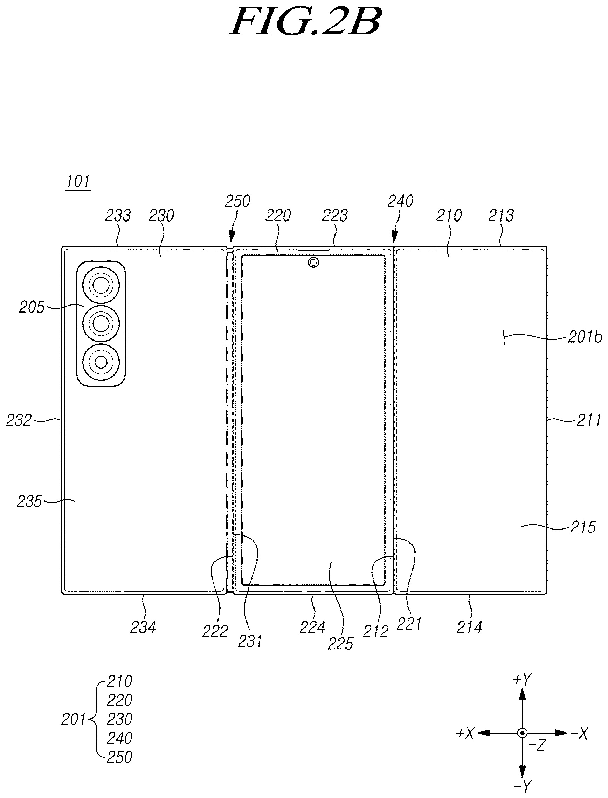

FIG. 2B is a rear view illustrating an unfolded state of an electronic device according to an embodiment.

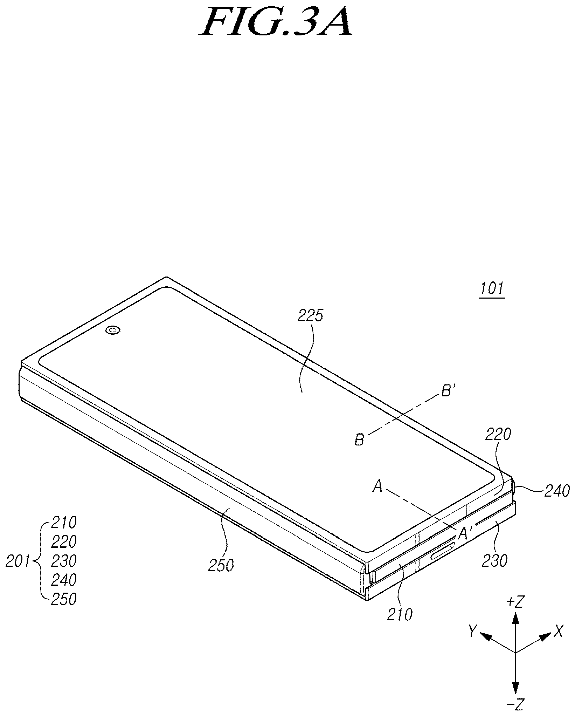

FIG. 3A is a front perspective view illustrating an electronic device in a folded state according to an embodiment.

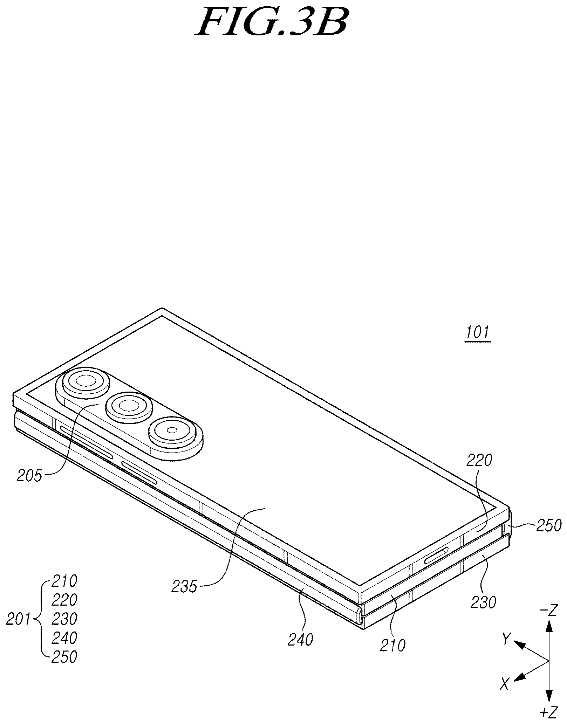

FIG. 3B is a rear perspective view illustrating an electronic device in a folded state according to an embodiment.

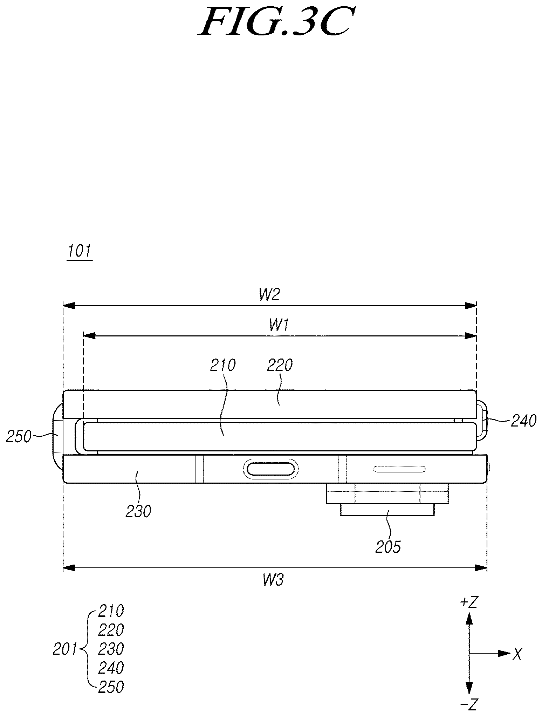

FIG. 3C is a top view illustrating a folded state of an electronic device according to an embodiment.

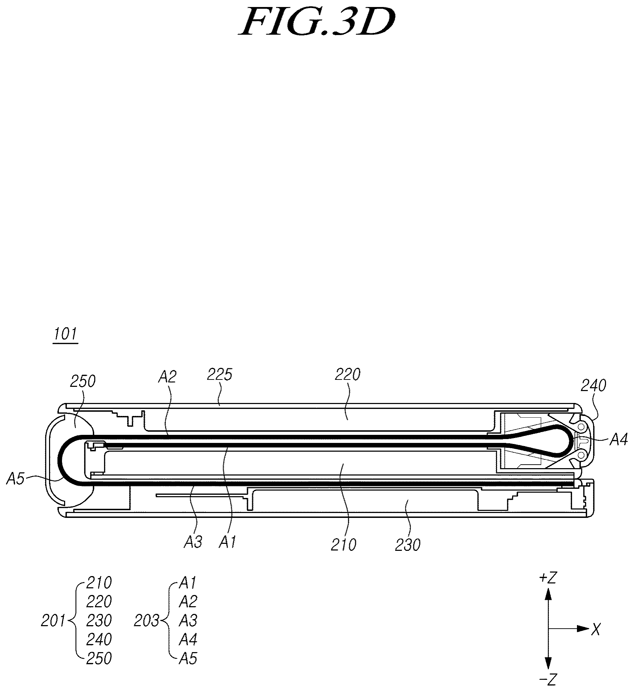

FIG. 3D is a see-through view illustrating a flexible display in a folded state of an electronic device according to an embodiment.

FIGS. 2A and 2B are views illustrating an unfolded state among folding states of an electronic device 101 (or a multi-foldable electronic device) according to an embodiment.

FIGS. 3A to 3D are views illustrating a folded state of an electronic device 101 (e.g., a multi-foldable electronic device) according to an embodiment.

The electronic device 101 of FIGS. 2A to 3D, as an example of the electronic device 101 shown in FIG. 1, may be a foldable or bendable electronic device.

Hereinafter, for convenience of description, a spatial coordinate system (or Cartesian coordinate system) including the X axis, Y axis, or Z axis is shown in FIGS. 2A to 3D. The X-axis direction, Y-axis direction, or Z-axis direction is defined or described with respect to the first housing 210, but is not limited thereto. In describing an embodiment of the disclosure, the 'first direction and/or the second direction' may mean directions parallel to the Z-axis direction.

The configuration of the electronic device 101 of FIGS. 2A to 3D may be identical in whole or part to the configuration of the electronic device 101 of FIG. 1.

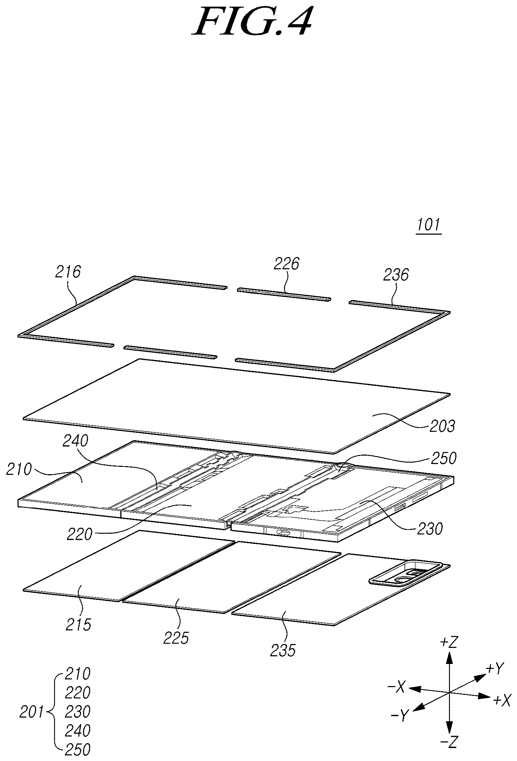

The embodiments of FIGS. 2A to 3D may be selectively combined with the embodiment of FIG. 1 or the embodiments of FIGS. 4 to 22B.

Referring to FIGS. 2A to 3D, an electronic device 101 may include a housing 201 or a flexible or foldable display (hereinafter, " flexible display 203") (e.g., the display module 160 of FIG. 1) disposed in a space formed by the housing 201.

According to an embodiment, the housing 201 may be defined and/or referred to as a foldable housing 201, a multi-foldable housing 201, or a deformable housing 201.

According to an embodiment, in the state in which the electronic device 101 is unfolded (e.g., FIGS. 2A and 2B), the surface (or side) on which the flexible display 203 is disposed (or the surface where the flexible display 203 is viewed from the outside of the electronic device 101) may be defined as a front surface 201a of the electronic device 101. In the unfolded state of the electronic device 101, the opposite surface (or side) of the front surface 201a may be defined as a rear surface 201b of the electronic device 101. Further, the surface surrounding the space between the front surface 201a and the rear surface 201b may be defined as a side surface of the electronic device 101.

According to an embodiment, the housing 201 may include a first housing 210, a second housing 220, a third housing 230, a first hinge structure 240, and/or a second hinge structure 250. The housing 201 may be referred to as a foldable housing component considering being manufactured in units of components. For example, the first housing 210 may be referred to as a first housing component, the second housing 220 may be referred to as a second housing component, and the third housing 230 may be referred to as a third housing component. The first hinge structure 240 may be defined and/or referred to as a first hinge assembly or a first in-folding hinge. The second hinge structure 250 may be defined and/or referred to as a second hinge assembly or a second in-folding hinge.

According to an embodiment, the first hinge structure 240 may be connected to the first housing 210 or the second housing 220. The second housing 220 may be rotatably connected to the first housing 210 through the first hinge structure 240. According to an embodiment, the second hinge structure 250 may be connected to the second housing 220 or the third housing 230. The third housing 230 may be rotatably connected to the second housing 220 through the second hinge structure 250.

According to an embodiment, the electronic device 101 may include a sensor area. The sensor area may be disposed on the housing 201. In the sensor area, an illuminance sensor and/or an image sensor may be disposed. The illuminance sensor may detect the amount of light around the electronic device 101. The image sensor may convert the light incident through the camera lens into a digital signal. The illuminance sensor and the image sensor may be visually exposed to the flexible display 203. According to an embodiment, the illuminance sensor and the image sensor may not be visually exposed. For example, the camera may be configured as an under display camera (UDC). Pixels in one area of the flexible display 203 corresponding to the location of the UDC may be configured to differ from pixels in other areas, so that the image sensor and/or camera may not be visually exposed.

According to an embodiment, the first housing 210 may be connected to the first hinge structure 240. The first housing 210 may include a first front surface (or side) facing a first direction (e.g., the +Z direction of FIG. 2A) or a first rear surface (or side) facing a second direction (e.g., the -Z direction of FIG. 2B) opposite to the first direction. The second housing 220 may be connected to the first hinge structure 240. The second housing 220 may include a second front surface (or side) facing the first direction (e.g., the +Z direction of FIG. 2A), or a second rear surface (or side) facing the second direction (e.g., the -Z direction of FIG. 2B) opposite to the first direction.

According to an embodiment, the first housing 210 may rotate with respect to the second housing 220 about the first hinge structure 240. The first housing 210 and the second housing 220 may provide a folded state (e.g., FIG. 3A to FIG. 3D) or an unfolded state (e.g., FIG. 2A to FIG. 2B). When the first housing 210 and the second housing 220 are in the folded state, the first front surface (or side) of the first housing 210 may face the second front surface (or side) of the second housing 220. When the first housing 210 and the second housing 220 are in the folded state, the first rear surface (or side) of the first housing 210 may face the direction opposite to the second rear surface (or side) of the second housing 220. When the first housing 210 and the second housing 220 are in the unfolded state, the first front surface (or side) of the first housing 210 may face the same direction as the second front surface (or side) of the second housing 220. When the first housing 210 and the second housing 220 are in the unfolded state, the first rear surface (or side) of the first housing 210 may face the same direction as the second rear surface (or side) of the second housing 220.

According to an embodiment, the second housing 220 may be connected to the second hinge structure 250. The third housing 230 may be connected to the second hinge structure 250. The third housing 230 may include a third front surface (or side) facing the first direction (e.g., the +Z direction of FIG. 2A), or a third rear surface (or side) facing the second direction (e.g., the -Z direction of FIG. 2B) opposite to the first direction.

According to an embodiment, the second housing 220 may rotate with respect to the third housing 230 around the second hinge structure 250. The second housing 220 and the third housing 230 may provide a folded state (e.g., FIG. 3A to FIG. 3D) or an unfolded state (e.g., FIG. 2A to FIG. 2B). The state in which the states of the second housing 220 and the third housing 230 are folded may be defined as a state in which the first and second housings 210 and 220 are additionally folded (e.g., secondary folding) with respect to the third housing 230 based on the state in which the first housing 210 and the second housing 220 are folded (e.g., primary folding).

According to an embodiment, when the second housing 220 and the third housing 230 are in the folded state, the second front surface (or side) of the second housing 220 may face the third front surface (or side) of the third housing 230. For example, when the second housing 220 and the third housing 230 are in the folded state, the second front surface (or side) of the second housing 220 may face the third front surface (or side) of the third housing 230 with the first housing 210 interposed therebetween. When the second housing 220 and the third housing 230 are in the folded state, the second rear surface (or side) of the second housing 220 may face the direction opposite to the third rear surface (or side) of the third housing 230. When the second housing 220 and the third housing 230 are in the unfolded state, the second front surface (or side) of the second housing 220 may face the same direction as the third front surface (or side) of the third housing 230. When the second housing 220 and the third housing 230 are in the unfolded state, the second rear surface (or side) of the second housing 220 may face the same direction as the third rear surface (or side) of the third housing 230.

According to an embodiment, the first housing 210 may include a 1-1th side surface 211, a 1-2th side surface 212, a 1-3th side surface 213, or a 1-4th side surface 214. The side surfaces of the first housing 210 may be defined and/or referred to as edge portions, side walls, and side portions of the first housing 210. The side surfaces of the first housing 210 may form at least a portion of the exterior of the first housing 210 between the first front surface (or side) and the first rear surface (or side).

According to an embodiment, the second housing 220 may include a 2-1th side surface 221, a 2-2th side surface 222, a 2-3th side surface 223, or a 2-4th side surface 224. The side surfaces of the second housing 220 may be defined and/or referred to as edge portions, side walls, and side portions of the second housing 220. The side surfaces of the second housing 220 may form at least a portion of the exterior of the second housing 220 between the second front surface (or side) and the second rear surface (or side). The 2-1th side surface 221 of the second housing 220 may be referred to as one side surface of the second housing 220.

According to an embodiment, the third housing 230 may include a 3-1th side surface 231, a 3-2th side surface 232, a 3-3th side surface 233, or a 3-4th side surface 234. The side surfaces of the third housing 230 may be defined and/or referred to as edge portions, side walls, and side portions of the third housing 230. The side surfaces of the third housing 230 may form at least a portion of the exterior of the third housing 230 between the third front surface (or side) and the third rear surface (or side).

According to an embodiment, the 1-1th side surface 211 of the first housing 210 may be disposed between the first front surface (or side) and the first rear surface (or side) to be spaced apart from the folding axis of the first hinge structure 240. The 1-2-th side surface 212 may be disposed to be spaced apart from the 1-1-th side surface 211 in a parallel state. The 1-3th side surface 213 may connect an upper end of the 1-1th side surface 211 to an upper end of the 1-2th side surface 212. The 1-3th side surface 213 may be defined and/or referred to as an upper side surface of the first housing 210. The 1-4th side surface 214 may connect a lower end of the 1-1th side surface 211 to a lower end of the 1-2th side surface 212. The 1-4th side surface 214 may be defined and/or referred to as a lower side surface of the first housing 210. The 1-4th side surfaces 214 may be disposed to be spaced apart from the 1-3th side surfaces 213 in a parallel state. The 1-3th side surface 213 and/or the 1-4th side surface 214 may be disposed substantially perpendicular to the 1-1th side surface 211 and/or the 1-2th side surface 212. The 1-2th side surface 212 may be connected to the 2-1th side surface 221 through the first hinge structure 240.

According to an embodiment, the 2-1th side surface 221 of the second housing 220 may be disposed between the second front surface (or side) and the second rear surface (or side) to be spaced apart from each other in a state parallel to the folding axis of the second hinge structure 250. The 2-1th side surface 221 may be disposed to be spaced apart from the 2-2th side surface 222 in a parallel state. The 2-3th side surface 223 may connect an upper end of the 2-1th side surface 221 and an upper end of the 2-2th side surface 222. The 2-3th side surface 223 may be defined and/or referred to as an upper side surface of the second housing 220. The 2-4th side surface 224 may connect a lower end of the 2-1th side surface 221 to a lower end of the 2-2th side surface 222. The 2-4th side surface 224 may be defined and/or referred to as a lower side surface of the second housing 220. The 2-4th side surfaces 224 may be disposed to be spaced apart from the 2-3th side surfaces 223 in a parallel state. The 2-3th side surface 223 and/or the 2-4th side surface 224 may be disposed substantially perpendicular to the 2-1th side surface 221 and/or the 2-2th side surface 222. The 2-1th side surface 221 may be connected to the 1-2th side surface 212 through the first hinge structure 240. The 2-2th side surface 222 may be connected to the 3-1th side surface 231 through the second hinge structure 250.

According to an embodiment, the 3-1th side surface 231 of the third housing 230 may be disposed between the third front surface (or side) and the third rear surface (or side) to be spaced apart from the folding axis of the third hinge structure in a parallel state. The 3-1th side surface 231 may be disposed to be spaced apart from the 3-2th side surface 232 in a parallel state. The 3-3th side surface 233 may connect an upper end of the 3-1th side surface 231 and an upper end of the 3-2th side surface 232. The 3-3th side surface 233 may be defined and/or referred to as an upper side surface of the third housing 230. The 3-4th side surface 234 may connect a lower end of the 3-1th side surface 231 to a lower end of the 3-2th side surface 232. The 3-4th side surface 234 may be defined and/or referred to as a lower side surface of the third housing 230. The 3-4th side surfaces 234 may be disposed to be spaced apart from the 3-3th side surfaces 233 in a parallel state. The 3-3th side 233 and/or the 3-4th side 234 may be disposed substantially perpendicular to the 3-1th side 231 and/or the 3-2th side 232. The 3-1th side surface 231 may be connected to the 2-2th side surface 222 through the second hinge structure 250.

According to an embodiment, when the first housing 210 is folded with respect to the second housing 220 around the first hinge structure 240 (e.g., FIGS. 3A to 3D), the 1-1th side surface 211 may approach the 2-2th side surface 222. When the first housing 210 is unfolded with respect to the second housing 220 about the first hinge structure 240 (e.g., FIGS. 2A to 2B), the 1-1-th side surface 211 may move away from the 2-2-th side surface 222.

According to an embodiment, when the second housing 220 is folded with respect to the third housing 230 around the second hinge structure 250 (e.g., FIGS. 3A to 3D), the 2-1th side surface 221 may approach the 3-2th side surface 232. When the second housing 220 is unfolded with respect to the third housing 230 around the second hinge structure 250 (e.g., FIGS. 2A to 2B), the 2-1th side surface 221 may move away from the 3-2th side surface 232.

According to an embodiment, in the fully folded state of the first housing 210 and the second housing 220, the first front surface (or side) and the second front surface (or side) may face each other, and the 1-1-th side surface 211 and the 2-2-th side surface 222 may be disposed adjacent to each other. According to an embodiment, the first housing 210 and the second housing 220 are disposed on two opposite sides of the first hinge structure 240 and may have a shape that is generally symmetrical with respect to the first hinge structure 240. As is described below, the angle or distance between the first housing 210 and the second housing 220 may vary depending on whether the state of the first housing 210 and the second housing 220 is the unfolded state, the folded state, or an intermediate state, i.e., a partially unfolded (or partially folded).

According to an embodiment, in the fully folded state of the second housing 220 and the third housing 230, the second front surface (or side) and the third front surface (or side) may face each other with the first housing 210 interposed therebetween, and the 2-1th side surface 221 and the 3-2th side surface 232 may be disposed adjacent to each other. According to an embodiment, the second housing 220 and the third housing 230 are disposed on two opposite sides of the second hinge structure 250 and may have a shape that is generally symmetrical with respect to the second hinge structure 250. As is described below, the angle or distance between the second housing 220 and the third housing 230 may vary depending on whether the state of the second housing 220 and the third housing 230 is the unfolded state, the folded state, or an intermediate state, i.e., a partially unfolded (or partially folded).

According to an embodiment, as shown in FIG. 2A, the first housing 210, the second housing 220, and the third housing 230 together may form a recess for receiving the flexible display 203. According to an embodiment, at least a portion of the first housing 210, the second housing 220, and the third housing 230 may be formed of a metal material or a non-metal material having a rigidity magnitude selected to support the flexible display 203. At least a portion formed of the metal material may provide a ground plane of the electronic device 101 and may be electrically connected to a ground line formed on a PCB disposed inside the housing 201.

According to an embodiment, protective members 216, 226, and 236 may be disposed outside the flexible display 203. The protection members may be integrally formed with the side surfaces of the foldable housing 201 or may be formed as separate structures. The flexible display 203 may not adhere to the side surface of the foldable housing 201 and/or the protection member. A gap may be formed between the flexible display 203 and the protection member. The protection member may be configured to cover the internal configuration of the electronic device 101 from the outside or to protect the internal configuration of the electronic device 101 from external impact. According to an embodiment, the protection member may be configured to cover the line disposed on the flexible display 203 from the outside or to protect it from an external impact. The protective member may be defined and/or referred to as a deco member, a peripheral member, or a rim member. The protective member may be formed of, but is not prevented to, a non-metal member.

According to an embodiment, the protective members 216, 226, and 236 may include a first protective member 216 disposed on the first housing 210, a second protective member 226 disposed on the second housing 220, or a third protective member 236 disposed on the third housing 230. The first protective member 216 may cover the first edge portion of the flexible display 203, the second protective member 226 may cover the second edge portion of the flexible display 203, and the third protective member 236 may cover the third edge portion of the flexible display 203.

According to an embodiment, the first housing 210 may include a first rear cover 215. The first rear cover 215 may be disposed on one side of the first hinge structure 240 on the rear surface 201b of the electronic device 101, and may have, e.g., a substantially rectangular edge. The edge of the first rear cover 215 may be surrounded by side surfaces of the first housing 210. According to an embodiment, the first rear cover 215 may include a rear cover material.

According to an embodiment, the second housing 220 may include a second rear cover 225. The second rear cover 225 may be disposed on the other side of the first hinge structure 240 or one side of the second hinge structure 250 on the rear surface 201b of the electronic device 101 and may have, e.g., a substantially rectangular edge. The edge of the second rear cover 225 may be surrounded by side surfaces of the second housing 220. According to an embodiment, the second rear cover 225 may include a display (or a display module) including a display panel and/or a circuit board.

According to an embodiment, the third housing 230 may include a third rear cover 235. The third rear cover 235 may be disposed on the other side of the second hinge structure 250 on the rear surface 201b of the electronic device 101 and may have, e.g., a substantially rectangular edge. The edge of the third rear cover 235 may be surrounded by side surfaces of the third housing 230. According to an embodiment, the third rear cover 235 may include a rear cover material.

According to an embodiment, the first rear cover 215 and the second rear cover 225 may have a substantially symmetrical shape with respect to the first hinge structure 240. The second rear cover 225 and the third rear cover 235 may have a substantially symmetrical shape with respect to the second hinge structure 250. However, the first rear cover 215, the second rear cover 225, and the third rear cover 235 do not necessarily have a mutually symmetrical shape, and in an embodiment, the electronic device 101 may include a first rear cover 215, a second rear cover 225, and a third rear cover 235 having various shapes. In an embodiment, the first rear cover 215 may be integrally formed with the first housing 210, the second rear cover 225 may be integrally formed with the second housing 220, and the third rear cover 235 may be integrally formed with the third housing 230.

According to an embodiment, the first rear cover 215, the second rear cover 225, the third rear cover 235, the first housing 210, the second housing 220, and the third housing 230 may form a space in which various components (e.g., a PCB or a battery) of the electronic device 101 may be disposed. According to an embodiment, one or more components may be disposed or visually exposed on the rear surface 201b of the electronic device 101. One or more components or sensors may be visually exposed through the third rear cover 235. In an embodiment, the sensor may include a proximity sensor.

According to an embodiment, the front camera disposed on the front surface (or side) of the electronic device 101 (e.g., the camera disposed on the third housing 230 and exposed through the third display area A3) or the rear camera 205 exposed through the third rear cover 235 may include one or more lenses, image sensors, and/or image signal processor. The flash may include, e.g., a light emitting diode (LED) or a xenon lamp. In an embodiment, two or more lenses (an infrared camera, a wide-angle lens, and a telescopic lens) and image sensors may be disposed on one surface (or side) of the electronic device 101.

According to an embodiment, the first hinge structure 240 or the second hinge structure 250 may be covered or exposed to the outside, by a portion of the first housing 210, the second housing 220, or the third housing 230 according to the state (unfolded state, intermediate state, or folded state) of the electronic device 101.

According to an embodiment, the folded state (e.g., the second folding) of the electronic device 101 may be a state in which the first housing 210 and the second housing 220 are folded with respect to the third housing 230 after the first housing 210 and the second housing 220 are folded. Accordingly, the second hinge structure 250 may have a wider width than the first hinge structure 240.

According to an embodiment, as illustrated in FIGS. 2A and 2B, when the electronic device 101 is in the unfolded state (e.g., a fully unfolded state), the first hinge structure 240 may be covered not to be exposed by the first housing 210 and the second housing 220, and at least a portion of the second hinge structure 250 may be exposed to the outside between the second housing 220 and the third housing 230.

According to an embodiment, when the electronic device 101 is in the folded state (e.g., the fully folded state), as illustrated in FIGS. 3A to 3D, at least a portion of the first hinge structure 240 may be exposed to the outside between the first housing 210 and the second housing 220, and at least a portion of the second hinge structure 250 may be exposed to the outside between the first housing 210 and the second housing 220.

According to an embodiment, when the first housing 210 and the second housing 220 are in a first intermediate state in which a predetermined angle is formed therebetween, the first hinge structure 240 may be partially exposed to the outside between the first housing 210 and the second housing 220. However, in this case, the exposed area may be smaller than in the state in which the first housing 210 and the second housing 220 are fully folded. According to an embodiment, the first hinge structure 240 may include a curved surface (or side).

According to an embodiment, when the second housing 220 and the third housing 230 are in a second intermediate state in which a predetermined angle is formed therebetween, the second hinge structure 250 may be partially exposed to the outside between the second housing 220 and the third housing 230. However, in this case, the exposed area may be smaller than in the state in which the second housing 220 and the third housing 230 are fully folded. According to an embodiment, the second hinge structure 250 may include a curved surface (or side).

According to an embodiment, the flexible display 203 may be disposed in a space formed by the housing 201. For example, the flexible display 203 is seated in a recess formed by the housing 201 and may be visible from the outside through the front surface 201a (e.g., the first front surface, the second front surface, and/or the third front surface) of the electronic device 101. According to an embodiment, the flexible display 203 may constitute most of the front surface 201a (e.g., the first front surface, the second front surface, and/or the third front surface) of the electronic device 101. Accordingly, the front surface 210a (e.g., the first front surface, the second front surface, and/or the third front surface) of the electronic device 101 may include the flexible display 203, a partial area of the first housing 210 adjacent to the flexible display 203, a partial area of the second housing 220 adjacent to the flexible display 203, and a partial area of the third housing 230 adjacent to the flexible display 203. The rear surface 201b (e.g., first rear surface, second rear surface and/or third rear surface) of the electronic device 101 may include the first rear cover 215, a partial area of the first housing 210 adjacent to the first rear cover 215, a partial area of the second housing 220 adjacent to the second rear cover 225, a partial area of the first housing 210 adjacent to the first rear cover 215, and a partial area of the first housing 210 adjacent to the first rear cover 215.

According to an embodiment, the flexible display 203 may be disposed on the front surface (or side) of each of the first housing 210, the second housing 220, and the third housing 230.

According to an embodiment, the flexible display 203 may mean a display in which at least a partial area of the flexible display 203 may be transformed into a flat or curved surface (or side). For example, flexible display 203 may be configured to be at least partially folded or at least partially unfolded.

According to an embodiment, the flexible display 203 may include a first display area A1, a second display area A2, a third display area A3, a first folding area A4, or a second folding area A5. The first display area A1 may be disposed on one side of the first folding area A4, and the second display area A2 may be disposed on the other side of the first folding area A4. The second display area A2 may be disposed on one side of the second folding area A5, and the third display area A3 may be disposed on the other side of the second folding area A5.

According to an embodiment, the first display area A1 may be disposed on the first housing 210, the second display area A2 may be disposed on the second housing 220, and the third display area A3 may be disposed on the third housing 230. According to an embodiment, the first display area A1 may be supported by the first housing 210, the second display area A2 may be supported by the second housing 220, and the third display area A3 may be supported by the third housing 230. According to an embodiment, the first folding area A4 may connect the first display area A1 and the second display area A2 and may be disposed on the first hinge structure 240. The second folding area A5 may connect the second display area A2 and the third display area A3 and may be disposed on the second hinge structure 250. The area division of the flexible display 203 shown in FIGS. 2A and 2B is exemplary, and the display may be divided into a plurality of areas (e.g., six or more or three areas) according to the structure or function.

According to an embodiment, the flexible display 203 may be coupled to or disposed adjacent to a touch panel having a pressure sensor capable of measuring the intensity (pressure) of touch or a touch sensing circuit. For example, the flexible display 203 may be disposed adjacent to or coupled with an electromagnetic induction panel, as an example of the touch pane, which detects a stylus pen of an electromagnetic resonance type.

According to an embodiment, the first display area A1 and the second display area A2 may have an overall symmetrical shape with respect to the first folding area A4. The second display area A2 and the third display area A3 may have an overall symmetrical shape with respect to the second folding area A5.

Hereinafter, the operation of the first housing 210 and the second housing 220 and the operation of each area of the flexible display 203 according to the states (e.g., the folded state, the unfolded state, or the first intermediate state) of the first housing 210 and the second housing 220 are described.

According to an embodiment, when the first housing 210 and the second housing 220 are in the unfolded state (e.g., FIGS. 2A to 2B), the first front surface of the first housing 210 and the second front surface of the second housing 220 may be disposed to form an angle of 180 degrees and face the same direction. The surface of the first display area A1 and the surface of the second display area A2 of the flexible display 203 form 180 degrees therebetween, and may face the same direction (e.g., the forward direction of the electronic device 101). In this case, the first folding area A4 may form the same plane as the first display area A1 and the second display area A2.

According to an embodiment, when the first housing 210 and the second housing 220 are in the folded state (e.g., FIGS. 3A to 3D), the first front surface (or side) of the first housing 210 and the second front surface (or side) of the second housing 220 may be disposed to face (e.g., oppose) each other. For example, the first rear cover 215 and the second rear cover 225 may face opposite directions. The surface of the first display area A1 of the flexible display 203 and the surface of the second display area A2 may face each other. For example, when the first housing 210 and the second housing 220 are in the folded state, the first display area A1 may be disposed to face (e.g., oppose) the -Z direction, and the second display area A2 may be disposed to face the +Z direction opposite to the -Z direction. For example, when the first housing 210 and the second housing 220 are in the folded state, and the second housing 220 and the third housing 230 are in the folded state, the surface of the third display area A3 may face the inside of the electronic device 101, and the surface of the third display area A3 may face the first rear cover 215. When the first housing 210 and the second housing 220 are in the folded state, at least a portion of the first folding area A4 may form a curved surface (or side) having a predetermined curvature. The curved surface (or side) of the first folding area A4 may be disposed to face (e.g., oppose) the inside of the electronic device 101.

According to an embodiment, when the first housing 210 and the second housing 220 are in the first intermediate state, the first housing 210 and the second housing 220 may be disposed at a predetermined angle therebetween. The surface of the first display area A1 and the surface of the second display area A2 of the flexible display 203 may form an angle smaller than in the unfolded state and larger than in the folded state. At least a portion of the first folding area A4 may form a curved surface (or side) having a predetermined curvature. For example, the radius of curvature of the curved surface (or side) of the first folding area A4 in the first intermediate state may be greater than the radius of curvature of the curved surface (or side) of the first folding area A4 in the folded state.

Hereinafter, the operation of the second housing 220 and the third housing 230 and the operation of each area of the flexible display 203 according to the state (e.g., the folded state, the unfolded state, or the second intermediate state) of the second housing 220 and the third housing 230 are described.

According to an embodiment, when the second housing 220 and the third housing 230 are in the unfolded state (e.g., FIGS. 2A to 2B), the second front surface of the second housing 220 and the third front surface of the third housing 230 may be disposed to form an angle of 180 degrees and face the same direction. The surface of the second display area A2 and the surface of the third display area A3 of the flexible display 203 form 180 degrees therebetween, and may face the same direction (e.g., the forward direction of the electronic device 101). In this case, the second folding area A5 may form the same plane as the second display area A2 and the third display area A3.

According to an embodiment, when the second housing 220 and the third housing 230 are in the folded state (e.g., FIGS. 3A to 3D), the second rear surface (or side) of the second housing 220 and the third rear surface (or side) of the third housing 230 may face opposite directions. For example, the second rear cover 225 may be disposed to face the +Z direction, and the third rear cover 235 may be disposed to face (e.g., oppose) the -Z direction. For example, when the second housing 220 and the third housing 230 are in the folded state, and the first housing 210 and the second housing 220 are in the folded state, the first rear cover 215 and the second rear cover 225 may face opposite directions, and the second rear cover 225 may face the outside of the electronic device 101. When the second housing 220 and the third housing 230 are in the folded state, the surface of the second display area A2 of the flexible display 203 and the surface of the third display area A3 may be disposed to face (e.g., oppose) each other with the first housing 210 interposed therebetween. When the second housing 220 and the third housing 230 are in the folded state, at least a portion of electrons in the second folding area A5 may form a curved surface (or side) having a predetermined curvature. The curved surface (or side) of the second folding area A5 may be disposed to face (e.g., oppose) the inside of the electronic device 101.

According to an embodiment, when the second housing 220 and the third housing 230 are in the second intermediate state, the second housing 220 and the third housing 230 may be disposed at a predetermined angle therebetween. The surface of the second display area A2 of the flexible display 203 and the surface of the third display area A3 may form an angle smaller than in the unfolded state and larger than in the folded state. At least a portion of the second folding area A5 may form a curved surface (or side) having a predetermined curvature. For example, the radius of curvature of the curved surface of the second folding area A5 in the second intermediate state may be greater than the radius of curvature of the curved surface (or side) of the second folding area A5 in the folded state.

According to an embodiment, the fully folded state of the electronic device 101 may be defined as a state in which the first housing 210 and the second housing 220 are in the folded state while the second housing 220 and the third housing 230 are in the folded state. The fully unfolded state of the electronic device 101 may be defined as a state in which the second housing 220 and the third housing 230 are in the unfolded state while the second housing 220 and the third housing 230 are in the unfolded state.

According to an embodiment, in the fully folded state of the electronic device 101 (e.g., FIGS. 3A to 3D), the first folding area A4 positioned on the first hinge structure 240 may not be exposed to the outside of the electronic device 101. The second folding area A5 positioned on the second hinge structure 250 may be disposed inside the electronic device 101 and may not be exposed to the outside.

In an embodiment, the first hinge structure 240 and the second hinge structure 250 may be defined and/or referred to as an in-folding hinge 250 that does not expose a portion of the flexible display 203 to the outside in the folded state. In an embodiment, the first hinge structure 240 may be provided as a first in-folding hinge, and the second hinge structure 250 may be provided as a second in-folding hinge.

According to an embodiment, the fully unfolded state (e.g., FIGS. 2A and 2B) of the electronic device 101 may be defined and/or referred to as a first state of the electronic device 101, and the fully folded state (e.g., FIGS. 3A to 3D) of the electronic device 101 may be defined and/or referred to as a second state of the electronic device 101.

According to an embodiment, the first hinge structure 240 may rotatably connect the first housing 210 and the second housing 220 to each other. The first hinge structure 240 may be connected to the 1-2th side surface 212 of the first housing 210 and the 2-1th side surface 221 of the second housing 220.

According to an embodiment, the second hinge structure 250 may rotatably connect the second housing 220 and the third housing 230 to each other. The second hinge structure 250 may be connected to the 2-2th side surface 222 of the second housing 220 and the 3-1th side surface 231 of the third housing 230. The second hinge structure 250 may have a wider width than that of the first hinge structure 240 to rotate the first and second housings 210 and 220 that have already been folded with respect to the third housing 230.

According to an embodiment, when the electronic device 101 is in the fully folded state (e.g., FIGS. 3A to 3D), the rear camera 205 may face (e.g., confront) opposite to the surface (or side) of the first display area A1. The rear camera 205 may face (e.g., oppose) the outside of the electronic device 101 when the electronic device 101 is in the fully folded state (e.g., FIGS. 3A to 3D) or when the electronic device 101 is in the fully unfolded state (e.g., FIGS. 2A to 2B).

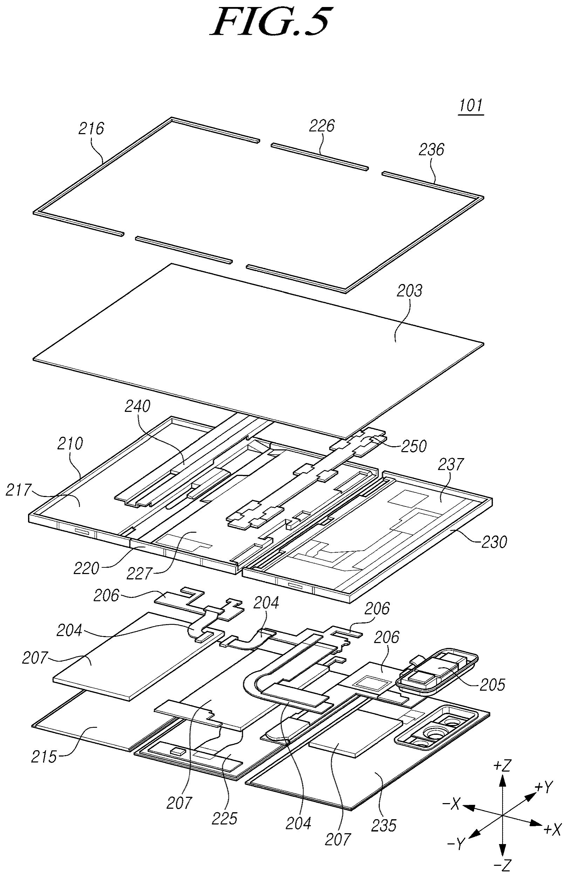

According to an embodiment, the conductive portions of the first housing 210, the second housing 220, and the third housing 230 may be provided as an antenna radiator of the electronic device 101. For example, the conductive portions of the foldable housing 201 may be electrically connected to a communication module (e.g., the communication module 190 of FIG. 1). The electronic device 101 may be configured to transmit and receive signals to and from an external electronic device 101 (e.g., the electronic device 102 and 104 of FIG. 1) through conductive portions of the housing 201. The communication module (e.g., the communication module 190 of FIG. 1) of the electronic device 101 may be disposed on at least one circuit board (e.g., at least one circuit board 206 of FIG. 5).

According to an embodiment, with respect to the width direction (e.g., the X-axis direction of FIG. 3C) of the electronic device 101, the first housing 210 may have a first width w1, the second housing 220 may have a second width w2, and the third housing 230 may have a third width w3. The first width w1 of the first housing 210 may be smaller (or shorter) than the second width w2 of the second housing 220. The third width w3 of the third housing 230 may be larger (or wider) than the second width w2 of the second housing 220. According to an embodiment, the third width w3 of the third housing 230 may be larger (or wider) than the first width w1 of the first housing 210. According to an embodiment, the first housing 210, the second housing 220, and the third housing 230 may have different widths. According to an embodiment, the first width w1 of the first housing 210 may be substantially the same as the third width w3 of the third housing 230.

FIG. 4 is an exploded perspective view illustrating an electronic device according to an embodiment.

FIG. 5 is an exploded perspective view illustrating specific components mounted in an electronic device according to an embodiment.

Referring to FIGS. 4 and 5, the electronic device 101 (e.g., the electronic device 101 of FIG. 1 or the electronic device 101 of FIGS. 2A to 3D) may include a foldable housing 201, a flexible display 203, a rear camera 205, at least one conductive connection member 204, at least one battery 207, or at least one circuit board 206.

The configuration of the foldable housing 201, the flexible display 203, or the rear camera 205 of FIGS. 4 and 5 may be identical in whole or part to the configuration of the housing 201, the flexible display 203, or the rear camera 205 of FIGS. 2A to 3D.

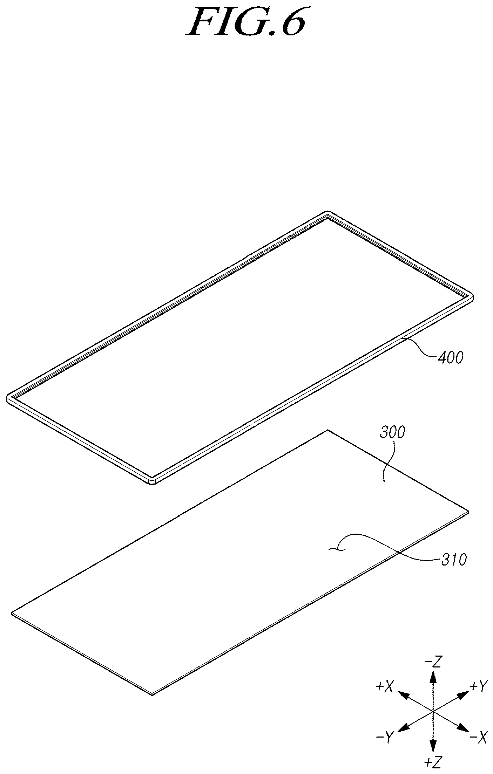

The embodiments of FIGS. 4 and 5 may be selectively combined with the embodiments of FIGS. 1 to 3D, or the embodiments of FIGS. 6 to 22B.

According to an embodiment, the electronic device 101 may include various electronic components (or electrical components) disposed in an inner or outer space of the first housing 210, the second housing 220, and the third housing 230. The various electronic components may include at least one of, e.g., a processor (e.g., the processor 120 of FIG. 1), a memory (e.g., the memory 130 of FIG. 1), an input module (e.g., the input module 150 of FIG. 1), a sound output module (e.g., sound output module 155 of FIG. 1), a display 203 (e.g., the display module 160 of FIG. 1), an audio module (e.g., the audio module 170 of FIG. 1), a sensor (e.g., the sensor module 176 of FIG. 1), an interface (e.g., the interface 177 of FIG. 1), a connecting terminal (e.g., the connecting terminal 178 of FIG. 1 or the connecting terminal 289 of FIG. 2), a haptic module (e.g., the haptic module 179 of FIG. 1), a camera module (e.g., the camera module 180 of FIG. 1), a power management module (e.g., the power management module 188 of FIG. 1), at least one battery 207 (e.g., the battery 189 of FIG. 1), a communication module (e.g., the communication module 190 of FIG. 1), a subscriber identification module (e.g., the subscriber identification module 196 of FIG. 1), or an antenna module (e.g., the antenna module 197 of FIG. 1). The electronic components may be appropriately separated and disposed in inner or outer spaces of the first housing 210, the second housing 220, and the third housing 230. At least one (e.g., the connecting terminal 178) of the components may be omitted from the electronic device 101, or one or more other components may be added in the electronic device 101. Further, some of these components may be integrated into one component.

According to an embodiment, a foldable housing 201 includes a first housing 210 (e.g., the first housing 210 of FIGS. 2A to 3D), a second housing 220 (e.g., the second housing 220 of FIGS. 2A to 3D), a third housing 230 (e.g., the third housing 230 of FIGS. 2A to 3D), a first protective member 216 (e.g., the first protective member 216 of FIGS. 2A and 2B), a second protective member 226 (e.g., the second protective member 226 of FIGS. 2A and 2B), a third protective member 236 (e.g., the third protective member 236 of FIG. 2A and 2B), a first rear cover 215 (e.g., the first rear cover 215 of FIGS. 2A to 3D), a second rear cover 225 (e.g., the second rear cover 225 of FIGS. 2A to 3D), a third rear cover 235 (e.g., the third rear cover 235 of FIGS. 2A to 3D), a first hinge structure 240 (e.g., the first hinge structure 240 of FIGS. 2A to 3D), or a second hinge structure 250 (e.g., the second hinge structure 250 of FIGS. 2A to 3D).

According to an embodiment, the first housing 210 may include a first plate 217. One surface (or side) of the first plate 217 (e.g., the surface facing the +Z direction of FIGS. 4 and 5) may support the flexible display 203 (e.g., the first display area A1 of FIG. 2A). At least one battery 207, at least one circuit board 206, or electrical/electronic components may be disposed on the other surface (or side) of the first plate 217 (e.g., the surface facing the -Z direction of FIGS. 4 and 5). The first plate 217 may be defined and/or referred to as a first bracket, a first support plate, or a first support member. The first plate 217 may be connected to the side surfaces of the first housing 210.

According to an embodiment, the second housing 220 may include a second plate 227. One surface (or side) of the second plate 227 (e.g., the surface facing the +Z direction of FIGS. 4 and 5) may support the flexible display 203 (e.g., the second display area A2 of FIG. 2A). At least one battery 207, at least one circuit board 206, or electrical/electronic components may be disposed on the other surface (or side) of the second plate 227 (e.g., the surface facing the -Z direction of FIGS. 4 and 5). The second plate 227 may be defined and/or referred to as a second bracket, a second support plate, or a second support member. The second plate 227 may be connected to the side surfaces of the second housing 220.

According to an embodiment, the third housing 230 may include a third plate 237. One surface (or side) of the third plate 237 (e.g., the surface facing the +Z direction of FIGS. 4 and 5) may support the flexible display 203 (e.g., the third display area A3 of FIG. 2A). At least one battery 207, at least one circuit board 206, or electrical/electronic components may be disposed on the other surface (or side) of the third plate 237 (e.g., the surface facing the -Z direction of FIGS. 4 and 5). The third plate 237 may be defined and/or referred to as a third bracket, a third support plate, or a third support member. The third plate 237 may be connected to the side surfaces of the third housing 230.

According to an embodiment, the electronic device 101 may include at least one battery 207 to supply and store power required for driving to the electronic components. At least one battery 207 may be provided as a plurality of batteries respectively disposed in the first housing 210, the second housing 220, and the third housing 230. According to an embodiment, the battery 207 may include, for example, a primary cell which is not rechargeable, a secondary cell which is rechargeable, or a fuel cell.

According to an embodiment, the first plate 217 and the second plate 227 may be folded or unfolded with respect to each other by a first hinge structure 240 formed corresponding to the first folding area A4 (e.g., the first folding area A4 of FIG. 2A) of the flexible display 203. The second plate 227 and the third plate 237 may be folded or unfolded with respect to each other by a second hinge structure 250 formed corresponding to the second folding area A5 (e.g., the second folding area A5 of FIG. 2A) of the flexible display 203.

According to an embodiment, the flexible display 203 may be disposed in the first housing 210, the second housing 220, and the third housing 230. According to an embodiment, the first display area A1 (e.g., the first display area A1 of FIG. 2A) may be disposed on the first housing 210 (or the first plate 217), the second display area A2 (e.g., the second display area A2 of FIG. 2A) may be disposed on the second housing 220 (or the second plate 227), and the third display area A3 (e.g., the third display area A3 of FIG. 2A) may be disposed on the third housing 230 (or the third plate 237). According to an embodiment, the first folding area A4 (e.g., the first folding area A4 of FIG. 2A) may connect the first display area A1 and the second display area A2 and may be disposed on the first hinge structure 240. The second folding area A5 (e.g., the second folding area A5 of FIG. 2A) may connect the second display area A2 and the third display area A3, and may be disposed on the second hinge structure 250.

According to an embodiment, the electronic device 101 may include at least one circuit board 206. At least one circuit board 206 may include a PCB, a flexible PCB (FPCB), or a rigid-flexible PCB (RF-PCB). At least one circuit board 206 may be provided as a plurality of circuit boards disposed in the first housing 210, the second housing 220, and the third housing 230. At least one circuit board 206 may be disposed between the plates 217, 227, 237 and the first, second, and third rear covers 215, 225, 235, but is not limited thereto.

According to an embodiment, signals of a processor for implementing various functions and operations of the electronic device 101 may be transmitted to electronic components through various conductive lines and/or connectors formed on at least one circuit board.

According to an embodiment, the flexible display 203 may include a display panel. The flexible display 203 may be at least partially folded or unfolded. The flexible display 203 may be supported by the first plate 217, the second plate 227, and/or the third plate 237.

According to an embodiment, the electronic device 101 may include at least one conductive connection member 204. At least one conductive connection member 204 may be configured to electrically connect a plurality of circuit boards or to electrically connect at least one circuit board 206 and electrical/electronic components. At least one conductive connection member 204 may include a FPCB or a flexible flat cable. At least a portion of the at least one conductive connection member 204 may be disposed on the first hinge structure 240 or the second hinge structure 250. For example, at least one conductive connection member 204 may be arranged to cross the first hinge structure 240 or the second hinge structure 250.

According to an embodiment, the electronic device 101 may include a rear member (not shown) (or a rear case). According to an embodiment, the rear member may be disposed in the housing 201 (e.g., the third housing 230). According to an embodiment, the rear member may receive at least one antenna.

According to an embodiment, the electronic device 101 may include an antenna (not shown). For example, the antennas 275a and 275b may include an ultra-wide band antenna, a near field communication antenna, a wireless charging antenna, and/or a magnetic secure transmission antenna. The antenna may perform short-range communication with, e.g., an external device or may wirelessly transmit or receive power necessary for charging.

According to an embodiment, an antenna structure may be formed by a portion of the housing 201 or a combination thereof. For example, the antenna may include a communication antenna at least a portion of which is exposed to the outside and which forms at least a portion of the exterior of the electronic device 101.

FIG. 6 is a perspective view illustrating a rear cover and an impact-absorbing member of an electronic device according to an embodiment.

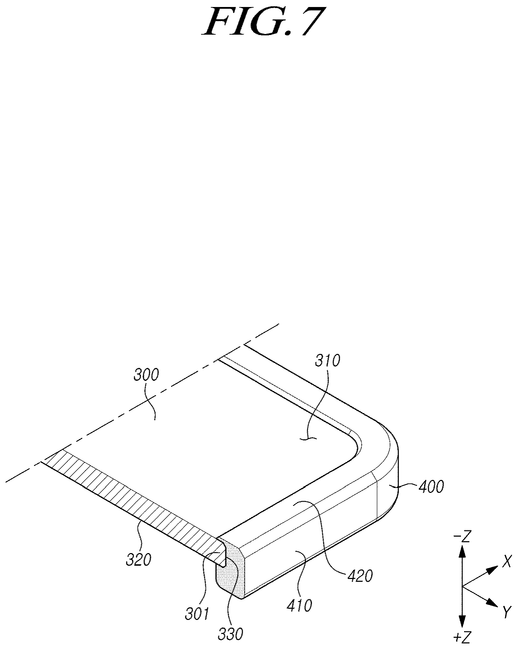

FIG. 7 is a perspective view illustrating a portion in a state in which a rear cover and an impact-absorbing member of an electronic device are coupled according to an embodiment.

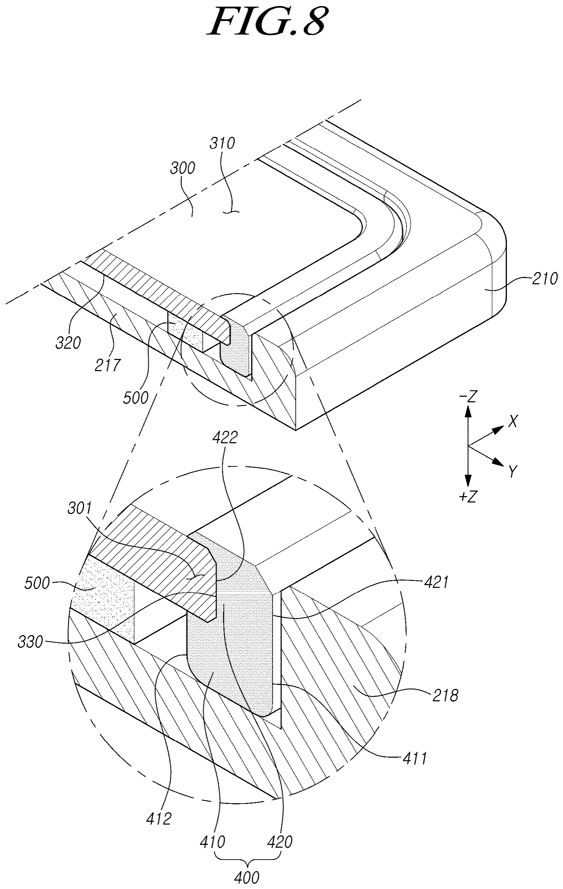

FIG. 8 is a cross-sectional view illustrating a rear cover and an impact-absorbing member disposed on a first housing of an electronic device according to an embodiment.

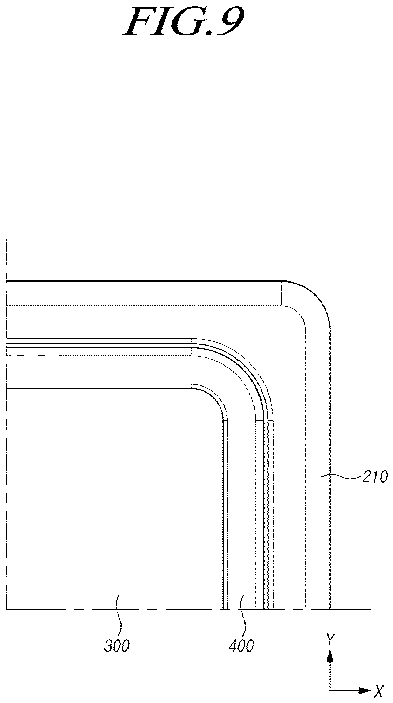

FIG. 9 is a view illustrating a rear cover and an impact-absorbing member disposed on a first housing of an electronic device according to an embodiment.

Referring to FIGS. 6 to 9, an electronic device 101 may include a foldable housing 201 including a first housing (e.g., the first housing 210 of FIGS. 2A to 5), a second housing (e.g., the second housing 220 of FIGS. 2A to 5), and a third housing (e.g., the third housing 230 of FIGS. 2A to 5). The electronic device 101 may include a flexible display (e.g., the flexible display 203 of FIGS. 2A to 5) disposed in the forward direction of the first housing 210, the second housing 220, and the third housing 230, and a first protective member (e.g., the first protective member 216 of FIGS. 2A to 5) covering the edge portion of the flexible display 203 and disposed on the first housing 210.

Referring to FIGS. 6 to 9, the electronic device 101 may include a rear cover 300 covering the rear surface (or side) of the first housing 210, and an impact-absorbing member 400 disposed along the edge portion 301 of the rear cover 300.

Referring to FIGS. 6 to 9, the impact-absorbing member 400 may be disposed along an edge of the first housing 210. The impact-absorbing member 400 may be disposed to surround the edge portion 301 (e.g., the edge and one surface adjacent to the edge (e.g., the surface facing the -Z-axis direction), the other surface (e.g., the surface facing the +Z-axis direction), and/or the side surface (e.g., the surface facing the X-axis or Y-axis direction)) of the rear cover 300.

The configuration of the rear cover 300 of FIGS. 6 to 9 may be identical in whole or part to the configuration of the first rear cover 215 of FIGS. 2A to 5.

The embodiments of FIGS. 6 to 9 may be selectively combined with the embodiments of FIGS. 1 to 5 and the embodiments of FIGS. 7 to 22B.

According to an embodiment, the first housing 210 may form a portion of the overall appearance of the electronic device 101. The first display area (e.g., the first display area A1 of FIG. 2A) of the flexible display 203 may be disposed in the forward direction (e.g., the +Z-axis direction) of the first housing 210, and the rear cover 300 may be disposed in the rear direction (e.g., the -Z-axis direction) of the first housing 210. Hereinafter, one side facing the +Z axis may be defined as at least one of a front surface, a front side, or a front end, and the other side facing the -Z axis may be defined as at least one of a rear surface, a rear side, or a rear end.

According to an embodiment, the first housing 210 may include a first support plate 217 on which the electronic components are mounted, and a first side wall 218 extending from the first support plate 217 (e.g., the first plate 217 of FIG. 5) and forming a side portion of the first housing 210. The first side wall 218 may protrude from an edge portion of the first support plate 217 toward the front surface (or side) and/or the rear surface (or side) of the first support plate 217. For example, the first side wall 218 may extend from the first support plate 217 in a substantially vertical direction.

According to an embodiment, the rear cover 300 is a rear cover that protects the inner space of the first housing 210 and forms the exterior of the electronic device 101 and may be formed of various materials. For example, the rear cover 300 may include at least one of a deco plate, glass, plastic, metal, ceramic, leather, or fiber.

According to an embodiment, the rear cover 300 may be a back glass including glass. The glass rear cover 300 may be easily used as a cover for the electronic device 101 by providing wireless charging support, premium design, communication signal enhancement, and/or efficient heat dissipation. For example, wireless charging technology may transmit power using electromagnetic induction or magnetic resonance. In this case, the metal may interfere with such power transmission (e.g., electromagnetic waves), but the glass rear cover 300 does not interfere with electron transmission, thereby supporting wireless charging. For example, the glass rear cover 300 may provide a more luxurious aesthetic, shiny finish, and soft touch than metal or plastic. For example, metal covers may weaken communication signals such as Wi-Fi, Bluetooth, GPS, and LTE, but the glass rear cover 300 may help maintain communication quality because it has less influence on communication signals. For example, since the glass rear cover (300) may radiate more effectively than metal, heat inside the electronic device may be easily dissipated to the outside.

According to an embodiment, in the folded state of the electronic device 101 (e.g., referring to FIGS. 3A to 3D, e-type), the rear surface (or side) of the first housing 210 may be disposed to face the front surface (or side) of the third housing 230. For example, the first housing 210 and the rear cover 300 may be disposed to face (e.g., oppose) the third display area (e.g., the third display area A3 of FIG. 2A) of the flexible display 203 facing forward of the third housing 230 and the third protective member (e.g., the third protective member 236 of FIGS. 2A and 2B). For example, the third protective member 236 may have a shape that protrudes in the forward direction extending outward from the third housing 230 and the third display area A3. For example, the third protective member 236 may have a shape that protrudes in the forward direction further than the third housing 230 and the third display area A3. The third protective member 236 may contact the impact-absorbing member 400 positioned to surround the edge of the rear cover 300 to prevent impact (e.g., damage to the outer surface due to friction and squeaking noise due to friction) due to direct contact to the rear cover 300 and the first housing 210 that it faces (e.g., confronts). When the third protective member 236 contacts the impact-absorbing member 400, the impact may be absorbed (e.g., mitigated).

According to an embodiment, the impact-absorbing member 400 may be disposed on the first housing 210 to cover the edge portion 301 of the rear cover 300. According to an embodiment, the impact-absorbing member 400 may be disposed along the edge portion 301 of the rear cover 300 to protect the edge portion 301 of the rear cover 300. The impact-absorbing member 400 may be formed in the shape of one closed loop or may be formed in a plurality of separated pieces disposed on the first housing 210.

According to an embodiment, the impact-absorbing member 400 may be configured to surround the edge portion 301 of the rear cover 300. For example, the edge portion 301 of the rear cover 300 may include an edge of the rear cover 300 and an adjacent portion thereto. For example, the edge portion 301 of the rear cover 300 may be at least one of the side surface 330 of the rear cover 300, a portion of one surface 310 extending from the side surface 330 in the -Z axis direction, or a portion of the other surface 320 extending from the side surface 330 in the +Z axis direction.

According to an embodiment, the impact-absorbing member 400 may be manufactured to include an elastic material. For example, the impact-absorbing member 400 may include at least one of rubber, silicone, urethane, elastomer, spandex, or foam.

According to an embodiment, the impact-absorbing member (also referred to as a cushioning member, a buffer member, or a damping element) 400 may be referred to as at least one of an edge member, a shield member, a cover member, an exterior member, a guide member, a sealing member, a closure member, a packing member, or a waterproof member. The term "member" may be interchangeably used with at least one of an element, a part, a portion, or a component.

According to an embodiment, when looking at the rear surface (or side) of the first housing 210, the impact-absorbing member 400 may be disposed to surround all the edge portions 301 of the rectangular rear cover 300. For example, the impact-absorbing member 400 may be disposed to completely surround the upper edge portion (e.g., the edge portion in the +Y-axis direction), the lower edge portion (e.g., the edge portion in the -Y-axis direction), the right edge portion (e.g., the edge in the -X-axis direction), and the left edge portion (e.g., the edge in the +X-axis direction) of the rear cover 300. The boundary surface (or side) of each edge portion of the rear cover 300 may be formed in a curved shape (or side), and the impact-absorbing member 400 may be formed in a curved shape (or side) to correspond thereto.

According to an embodiment, the impact-absorbing member 400 may be exposed to the rear side of the electronic device 101 to form the outermost layer in the unfolded state of the electronic device 101, and may cover the third display area A3 not to be visible from the outside in the folded state of the electronic device 101.

According to an embodiment, at least a portion of the impact-absorbing member 400 may include a portion protruding further outward than one surface 10 (e.g., one surface facing the -Z axis) of the rear cover 300. According to an embodiment, at least a portion of the impact-absorbing member 400 may include a portion protruding (e.g., extending) further outward than one surface (or side) of the first housing 210. For example, at least a portion of the impact-absorbing member 400 may include a portion protruding (e.g., extending) further in the rear direction (e.g., the -Z axis direction) than the first side wall 218 of the first housing 210.

According to an embodiment, the impact-absorbing member 400 may include a first impact-absorbing portion 410 and a second impact-absorbing portion 420 extending from the first impact-absorbing portion 410. The first impact-absorbing portion 410 may be positioned inside the first housing 210 and may support the impact-absorbing member 400 as a whole. The second impact-absorbing portion 420 may extend from the first impact-absorbing portion 410, form a portion of the exterior of the electronic device 101 and may be disposed between the rear cover 300 and the first side wall 218 of the first housing 210. The second buffer portion 420 may be formed to substantially surround the edge portion 301 of the one surface 310 of the rear cover 300.

According to an embodiment, the first impact-absorbing portion 410 and the second impact-absorbing portion 420 are formed of the same material and may be formed as a monolithic support body or a single piece or one body. A portion (e.g., the second impact-absorbing portion 420) of the monolithic support body may have a structure that is exposed to the outside of the first housing 210 and seamlessly extends from the first impact-absorbing portion 410 to the second impact-absorbing portion 420.

According to an embodiment, the outer side 411 (e.g., the surface facing the outside of the electronic device 101) of the first impact-absorbing portion 410 may be formed to be surrounded by the first side wall 218 forming the edge of the first housing 210. The inner side 412 (e.g., the surface facing the inside of the electronic device 101) of the first impact-absorbing portion 410 may be disposed to face (e.g., oppose) the adhesive member 500 and the electronic components inside the electronic device 101.

According to an embodiment, the outer side 421 (e.g., the surface facing the outside of the electronic device 101) of the second impact-absorbing portion 420 may be formed to be surrounded by the first side wall 218 forming the edge of the first housing 210. Another portion of the second impact-absorbing portion 420 may protrude from the first side wall 218 of the first housing 210 and may be exposed to the outside. The inner side 422 (e.g., the surface facing the inside of the electronic device 101) of the second impact-absorbing portion 420 may be disposed to face the side surface 330 (and a portion of the one surface 310 and the other surface 320) of the rear cover 300. As the inner side 422 of the second impact-absorbing portion 420 is disposed to entirely surround the edge portion 301 of the rear cover 300, the rear cover 300 may not be visible from the outside. According to an embodiment, when looking at the rear cover 300, a portion of the second impact-absorbing portion 420 may be disposed to overlap a portion of the one surface 310 of the rear cover 300.

According to an embodiment, the operator may dispose the impact-absorbing member 400 along the edge portion 301 of the rear cover 300 and then arrange and mount the coupled rear cover 300 and impact-absorbing member 400 on the first support plate 217 of the first housing 210. When looking at the cross-section of the coupled rear cover 300 and impact-absorbing member 400 (e.g., referring to FIGS. 7 and 8), the edge portion 301 of the rear cover 300 may be disposed to push and overlap the inside of the impact-absorbing member 400. For example, the impact-absorbing member 400 may include a recess formed along the inside, and the edge portion 301 of the rear cover 300 may be seen as being inserted into the recess.

According to an embodiment, in order to fix the coupled rear cover 300 and impact-absorbing member 400 to the first housing 210, an adhesive member 500 may be disposed on the other surface 320 of the rear cover 300 to fix the rear cover 300 to the first support plate 217 of the first housing 210. The adhesive member 500 may be disposed along an adjacent area of the edge portion 301 of the rear cover 300. The adhesive member 500 may be formed in one closed loop shape. The adhesive member 500 may be formed of various materials such as tape or bonding for fixing the rear cover 300 to the first housing 210.

According to an embodiment, an adhesive member (not illustrated) may be disposed on one side of the impact-absorbing member 400, and the impact-absorbing member 400 may be fixed to the first housing 217 of the first housing 210 in order to reinforce the fixing of the coupled rear cover 300 and impact-absorbing member 400 or to prevent a movement of the impact-absorbing member 400. The adhesive member may be disposed at one end of the first impact-absorbing portion 410 of the impact-absorbing member 400.

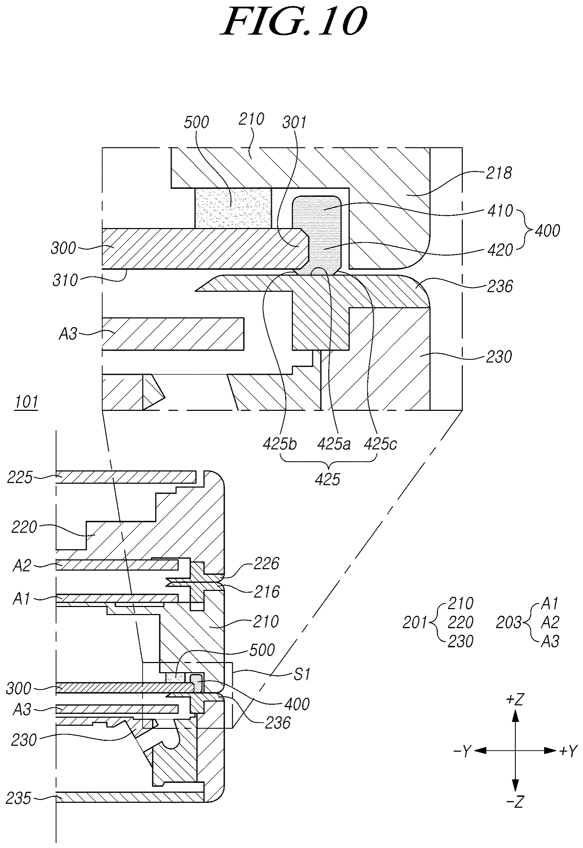

FIG. 10 is a cross-sectional view taken along A-A' of the electronic device of FIG. 3A, and an enlarged view of an area S1 of the cross-sectional view according to an embodiment.

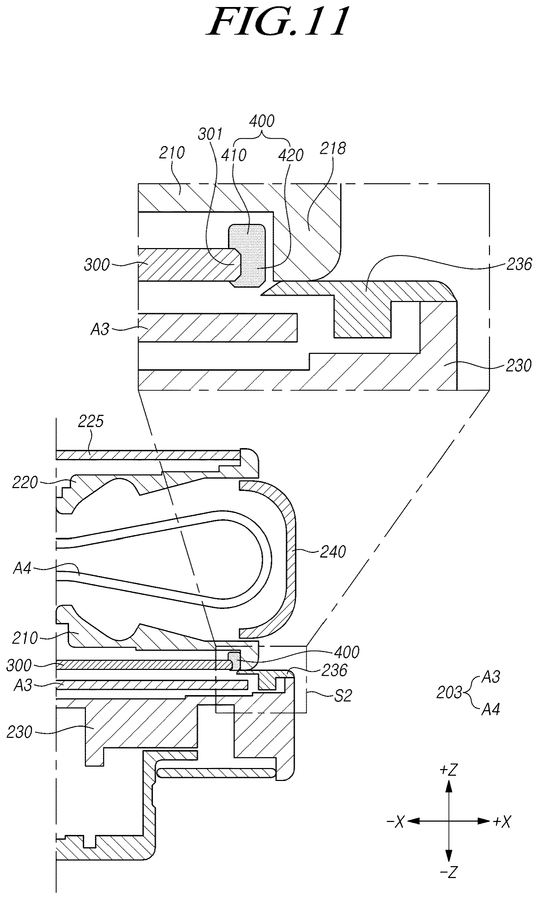

FIG. 11 is a cross-sectional view taken along B-B' of the electronic device of FIG. 3A, and an enlarged view of an area S2 of the cross-sectional view according to an embodiment.

Referring to FIGS. 10 and 11, an electronic device 101 may include a foldable housing 201 including a first housing 210, a second housing 220, and a third housing 230. The electronic device 101 may include a flexible display 203 disposed in the forward direction of the first housing 210, the second housing 220, and the third housing 230, and a protective member covering an edge portion of the flexible display 203. The protective member may include a first protective member 216 disposed on the first housing 210, a second protective member 226 disposed on the second housing 220, and a third protective member 236 disposed on the third housing 230.

Referring to FIGS. 10 and 11, the electronic device 101 may include a rear cover 300 covering the rear surface (or side) of the first housing 210, and an impact-absorbing member 400 disposed along the edge of the rear cover 300.

The components of the electronic device 101 of FIGS. 10 and 11 may be identical in whole or part to the components of the electronic device 101 of FIGS. 2A to 9.

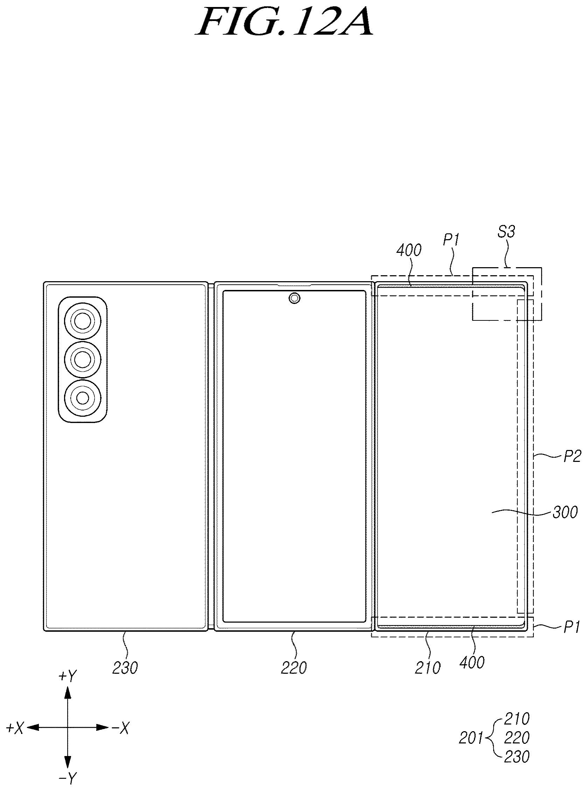

The embodiments of FIGS. 10 and 11 may be selectively combined with the embodiments of FIGS. 1 to 9 and the embodiments of FIGS. 12A to 22B.

According to an embodiment, in the unfolded state (see FIGS. 3A to 3D) of the electronic device 101, the first housing 210 may be positioned between the second housing 220 and the third housing 230. The first display area A1 of the flexible display 203 supported by the first housing 210 may face (e.g., oppose) the second display area A2 of the flexible display 203 supported by the second housing 220. The first protective member 216 covering the edge of the first display area A1 may be disposed in contact with the second protective member 226 covering the edge of the second display area A2. The rear cover 300 disposed toward the rear surface (or side) of the first housing 210 may face (e.g., oppose) the third display area A3 of the flexible display 203 supported by the third housing 230. The impact-absorbing member 400 covering the edge portion 301 of the rear cover 300 may be disposed in contact with the third protective member 236 covering the edge of the third display area A3.

According to an embodiment, the foldable housing 201 may be referred to as a foldable housing component considering that it is manufactured in a component unit. For example, the first housing 210 may be referred to as a first housing component, the second housing 220 may be referred to as a second housing component, and the third housing 230 may be referred to as a third housing component.

According to an embodiment, in the folded state of the electronic device 101, the impact-absorbing member 400 and the third protective member 236 may be disposed to face (e.g., oppose) each other, and may at least partially contact each other. For example, in the folded state of the electronic device 101, the impact-absorbing member 400 and the third protective member 236 may be in a state in which they overall overlap each other. For example, in the folded state of the electronic device 101, the impact-absorbing member 400 and the third protective member 236 may be arranged so that only the upper and lower portions (e.g., portions in the +Y-axis or -Y-axis direction) contact, and the left and right portions (e.g., portions in the +X-axis or -X-axis direction) are spaced apart.

According to an embodiment, the impact-absorbing member 400 may include a first impact-absorbing portion 410 inserted into the first housing 210, and a second impact-absorbing portion 420 extending outward (e.g., rear direction (-Z-axis direction)) from the first impact-absorbing portion 410 and substantially covering the edge portion 301 of the rear cover 300. The second impact-absorbing portion 420 of the impact-absorbing member 400 may have a shape protruding in the -Z-axis direction further than the outer surface of the rear cover 300 (or the first side wall 218 of the first housing 210) and, in the folded state of the electronic device 101, prevent contact between the third display area A3 of the third housing 230 and the rear cover 300. For example, in the folded state of the electronic device 101, the rear cover 300 and the third display area A3 may remain spaced apart by contact between the impact-absorbing member 400 and the third protective member 236. For example, in the folded state of the electronic device 101, the third protective member 236 and the first side wall 218 of the first housing 210 may remain spaced apart by contact between the impact-absorbing member 400 and the third protective member 236.

According to an embodiment, the second impact-absorbing portion 420 of the impact-absorbing member 400 may include a first surface 425 facing a rear direction (e.g., a -Z-axis direction) of the electronic device 101, and the first surface 425 may include a flat surface 425a parallel to the one surface 310 of the rear cover 300, and surfaces 425b and 425c inclined toward the first side wall 218 of the first housing 210 or the rear cover 300 with respect to the flat surface 425a.

According to an embodiment, the first surface 425 of the second impact-absorbing portion 420 may have a shape protruding (e.g., extending) further outward than the adjacent rear cover 300 and the first side wall 218 of the first housing 210, and the first surface 425 may be exposed to the outside of the electronic device 101. For example, in the unfolded state of the electronic device 101, the flat surface 425a of the first surface 425 of the second impact-absorbing portion 420 may be a surface (or side) directly contacting the third protective member 236 and be exposed to the outside.

According to an embodiment, in the first surface 425 of the second impact-absorbing portion 420, the inclined surfaces 425b and 425c may be formed at an edge of the second impact-absorbing portion 420 to seamlessly extend from the rear cover 300 of the electronic device 101 and/or the first side wall 218 of the first housing 210. For example, the first surface 425 may include a flat surface 425a and a first inclined surface 425b inclined toward the rear cover 300. For example, the first surface 425 may include a flat surface 425a, a first inclined surface 425b inclined toward the rear cover 300, and a second inclined surface 425c inclined toward the first side wall 218 of the first housing 210.

According to an embodiment, in the folded state of the electronic device 101, the impact-absorbing member 400 and the third protective member 236 may be disposed not to face (e.g., oppose) each other. For example, in the left or right edge portion of the electronic device 101 of FIG. 11 (e.g., the +X-axis, -Y-axis edge portion), the third protective member 236 may be disposed to directly contact or partially spaced apart from the first side wall 218 of the first housing 210, unlike the upper or lower edge portion of the electronic device 101 of FIG. 10.

According to an embodiment, in the folded state of the electronic device 101, the impact-absorbing member 400 is formed to surround the edge portion 301 of the rear cover 300 and may be spaced apart from the third display area A3. However, according to the arrangement relationship between the first housing 210 and the third housing 230 and the arrangement relationship between the impact-absorbing member 400 and the third protective member 236, the design may be easily changed so that the impact-absorbing member 400 and the third protective member 236 directly contact each other.

FIG. 12A is a rear view illustrating an unfolded state of an electronic device according to an embodiment.

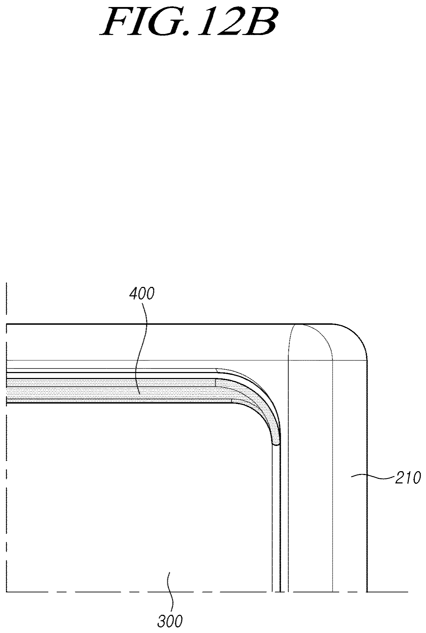

FIG. 12B is an enlarged view illustrating an area S3 of the electronic device of FIG. 12A according to an embodiment.

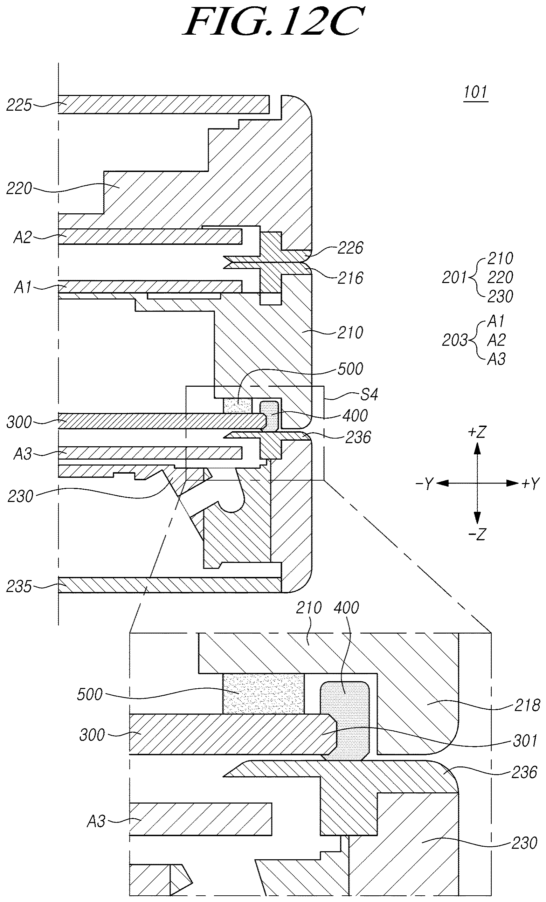

FIG. 12C is a cross-sectional view taken along A-A' of the electronic device of FIG. 3A, and an enlarged view of an area S4 of the cross-sectional view according to an embodiment.

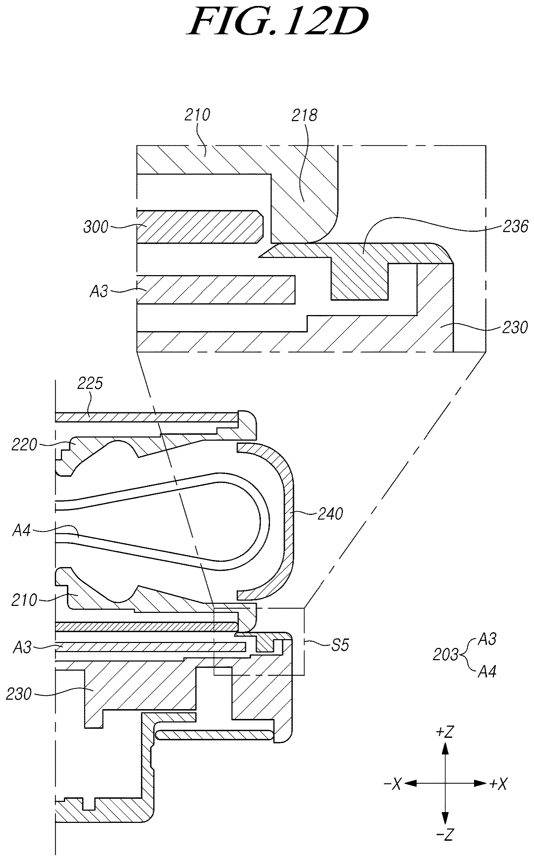

FIG. 12D is a cross-sectional view taken along B-B' of the electronic device of FIG. 3A, and an enlarged view of an area S5 of the cross-sectional view according to an embodiment.

Referring to FIGS. 12A to 12D, an electronic device 101 may include a foldable housing 201 including a first housing 210, a second housing 220, and a third housing 230. The electronic device 101 may include a flexible display (e.g., the flexible display 203 of FIG. 2A) disposed in the forward direction of the first housing 210, the second housing 220, and the third housing 230, and a protective member covering the edge portion of the flexible display 203. The protective member may include a first protective member 216 disposed on the first housing 210, a second protective member 226 disposed on the second housing 220, and a third protective member 236 disposed on the third housing 230.

Referring to FIGS. 12A to 12D, the electronic device 101 may include a rear cover 300 covering the rear surface (or side) of the first housing 210, and an impact-absorbing member 400 disposed along an edge of the rear cover 300.

The components of the electronic device 101 of FIGS. 12A to 12D may be identical in whole or part to the components of the electronic device 101 of FIGS. 2A to 11.

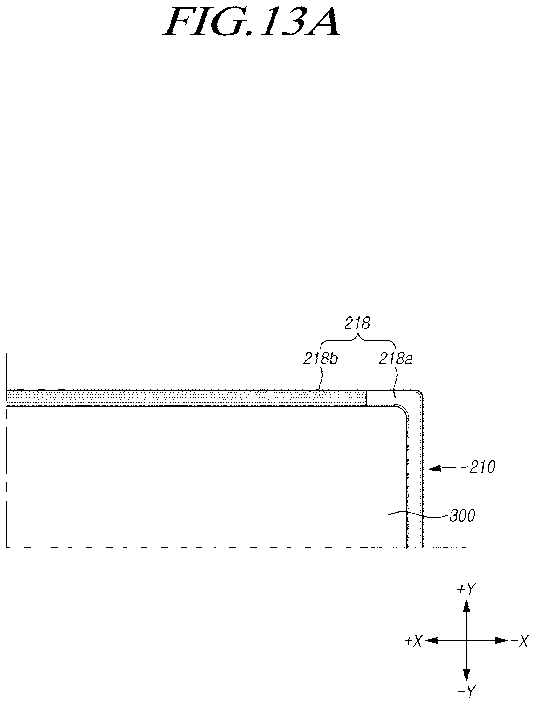

The embodiments of FIGS. 12A to 12D may be selectively combined with the embodiments of FIGS. 1 to 11 and the embodiments of FIGS. 13A to 22B.

Hereinafter, in FIGS. 12A to 12D, unlike the shape (e.g., a closed loop) of the impact-absorbing member 400 of FIGS. 6 to 11, a configuration associated with the shape of the impact-absorbing member 400 disposed only on an upper side and/or lower side (e.g., the portion in the +Y-axis or -Y-axis direction) of the electronic device 101 and adjacent structures is described.

According to an embodiment (see FIGS. 12A and 12B), in the unfolded state of the electronic device 101, when looking in the rear direction of the first housing 210, the impact-absorbing member 400 may be disposed on the upper and/or lower edge portion 301 (e.g., the edge portion in the +Y axis or -Y-axis direction) of the rear cover 300. The first housing 210 and the peripheral portion in which the impact-absorbing member 400 disposed on the first housing 210 contacts the third protective member 236 covering the third housing 230 may be referred to as a contact section P1. The first housing 210 and the peripheral portion that do not contact the third protective member 236 covering the third housing 230 as the impact-absorbing member 400 is not disposed may be referred to as a contactless section P2.

According to an embodiment (see FIGS. 12B and 12C), the impact-absorbing member 400 may be disposed along the upper edge portion 301 and/or the lower edge portion of the rear cover 300. For example, the impact-absorbing member 400 may be disposed to cover a portion of the upper edge portion 301 and/or the lower edge portion of the rear cover 300. The impact-absorbing member 400 may be disposed to face (e.g., oppose) an upper edge portion and/or a lower edge portion of the third protective member 236. For example, in the folded state of the electronic device 101, the impact-absorbing member 400 and the third protective member 236 may be arranged to face (e.g., oppose) each other, and may at least partially contact each other.

According to an embodiment (see FIGS. 12B and 12C), the rear surface (or side) of the first housing 210 may be disposed to face (e.g., oppose) the front surface (or side) of the third housing 230. For example, the first housing 210 and the rear cover 300 may be disposed to face (e.g., oppose) the third protective member 236 and the third display area A3 of the flexible display 203 facing forward of the third housing 230. For example, the third protective member 236 may have a shape protruding in the forward direction further than (e.g., extending outward from) the third housing 230 and the third display area A3. The third protective member 236 may contact the impact-absorbing member 400 positioned to surround the edge of the rear cover 300 to prevent impact (e.g., damage to the outer surface due to friction and squeaking noise due to friction) due to direct contact to the rear cover 300 and the first housing 210 that it faces (e.g., opposes).

According to an embodiment (see FIG. 12D), in the folded state of the electronic device 101, the impact-absorbing member 400 and the third protective member 236 may be disposed not to face (e.g., oppose) each other. For example, in the left or right edge portion of the electronic device 101 (e.g., the +X-axis, -Y-axis edge portion), the third protective member 236 may be disposed to directly contact or partially spaced apart from the first side wall 218 of the first housing 210, unlike the upper or lower edge portion of the electronic device 101.

According to an embodiment, as the impact-absorbing member 400 is disposed only on the upper or lower edge portion 301 of the rear cover 300 where the rear cover 300 and the third protective member 236 substantially face (e.g., oppose) each other, it is possible to increase the area in which the rear cover 300 is exposed to the outside and prevent the black matrix from being viewed as increased, thereby enhancing design aesthetics. Further, by reducing the size of the impact-absorbing member 400, it is possible to save materials and increase work efficiency.

FIG. 13A is a rear view illustrating a portion of a first housing of an electronic device according to an embodiment.

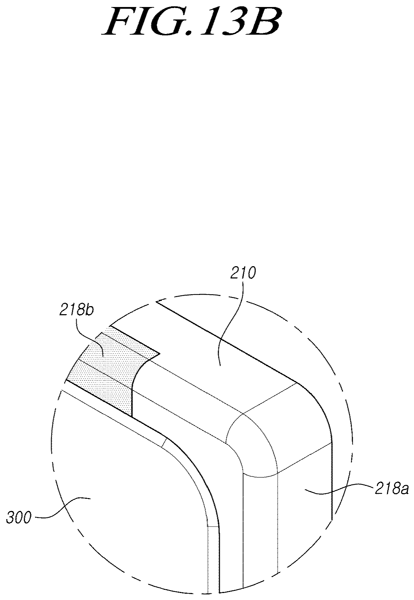

FIG. 13B is an enlarged perspective view illustrating an edge portion of the first housing of FIG. 13A according to an embodiment.

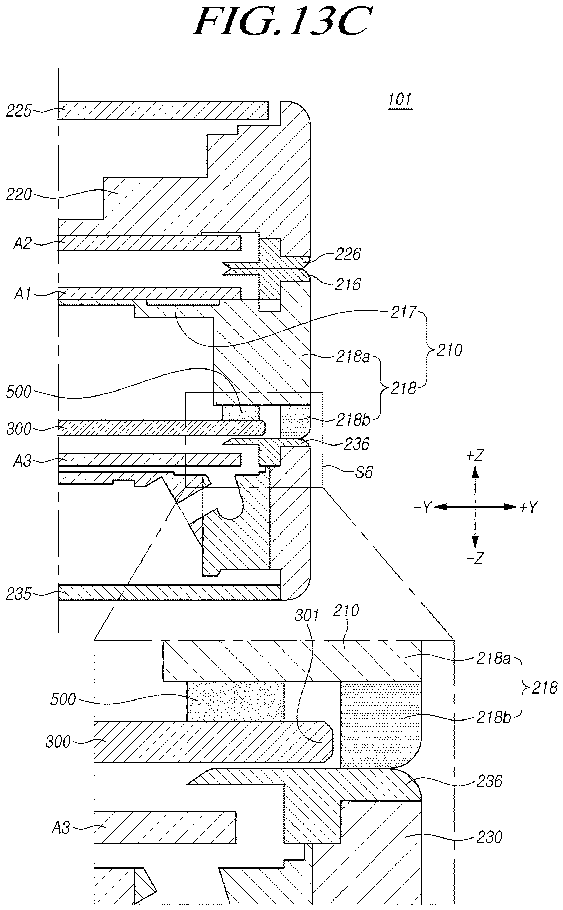

FIG. 13C is a cross-sectional view taken along A-A' of the electronic device of FIG. 3A, and an enlarged view of an area S6 of the cross-sectional view according to an embodiment.

Referring to FIGS. 13A to 13C, an electronic device 101 may include a foldable housing 201 including a first housing 210, a second housing 220, and a third housing 230. The electronic device 101 may include a flexible display (e.g., the flexible display 203 of FIG. 2A) disposed in the forward direction of the first housing 210, the second housing 220, and the third housing 230, and a protective member covering the edge portion of the flexible display 203. The protective member may include a first protective member 216 disposed on the first housing 210, a second protective member 226 disposed on the second housing 220, and a third protective member 236 disposed on the third housing 230.

Referring to FIGS. 13A to 13C, the electronic device 101 may include a rear cover 300 covering the rear surface (or side) of the first housing 210.

The components of the electronic device 101 of FIGS. 13A to 13C may be identical in whole or part to the components of the electronic device 101 of FIGS. 2A to 11.

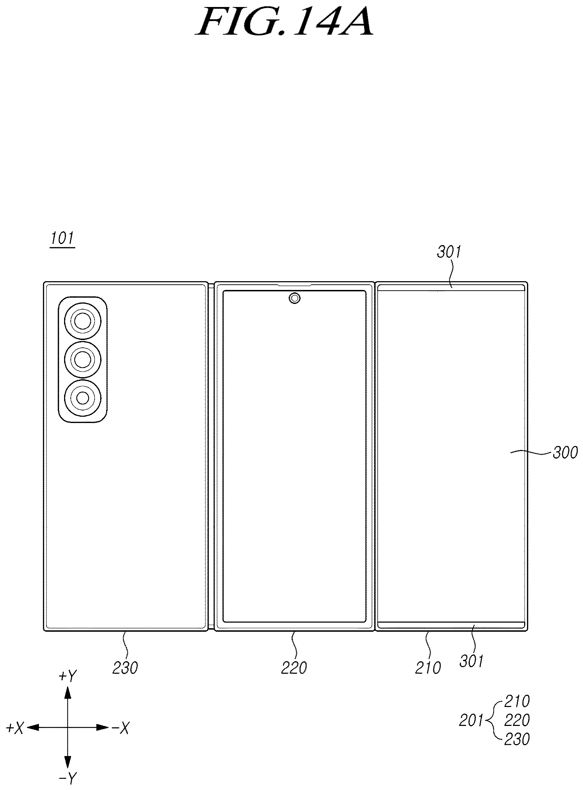

The embodiments of FIGS. 13A to 13C may be selectively combined with the embodiments of FIGS. 1 to 12D and the embodiments of FIGS. 14A to 22B.

Hereinafter, in FIGS. 13A to 13C, a configuration in which the shape and/or material of the first housing 210 is changed, and the impact-absorbing member 400 is excluded from the electronic device 101 disclosed in FIGS. 6 and 11 is described.

According to an embodiment, the first housing 210 may include a first support plate 217 and a first side wall 218 extending along an edge of the first support plate 217. The first side wall 218 may include a 1-1th side wall 218a formed of a first material and a 1-2th side wall 218b formed of a second material different from the first material. The 1-1th side wall 218a is a portion extending from the first support plate 217 and may include substantially the same material (e.g., a metal) as the first support plate 217. The 1-2th side wall 218b is a portion of the first housing 210 disposed along the edge portion 301 of the rear cover 300, and the second material may include an elastic material or an injection-molded material. The 1-2th side wall 218b may be disposed to be spaced apart from the edge portion 301 of the rear cover 300. For example, the second material may include at least one of polypropylene, polyethylene, polystyrene, acrylonitrile butadiene styrene, polycarbonate, or nylon.

According to an embodiment, the 1-2th side wall 218b formed of the second material of the first housing 210 may protrude more than one surface (e.g., one surface facing the -Z axis) of the rear cover 300 to prevent the rear cover 300 from contacting the third protective member 236. For example, in the folded state (or folding operation) of the electronic device 101, the 1-2th side wall 218b protruding further than the one surface of the rear cover 300 directly contacts the third protective member 236, thereby preventing the collision between the rear cover 300 and the third protective member 236. In the folded state (or folding operation) of the electronic device 101, the collision between the third protective member 236 and the 1-2th side wall 218b is a contact between injection-molded or elastic members, which may reduce damage and/or noise.

According to an embodiment, the 1-2th side wall 218b of the first housing 210 may be disposed to correspond to the shape of the third protective member 236. For example, when viewed from one surface (or side) of the rear cover 300, the 1-2th side wall 218b may have a shape of '['. The 1-2th side wall 218b may be positioned along an upper side (e.g., +Y-axis direction), a lower side (e.g., -Y-axis direction), and a left side (e.g., +X-axis direction) of an edge of the rear cover 300, and may have an open side facing the outside. However, the shape of the 1-2th side wall 218b is not prevented thereto, and the design may be changed to various shapes in which the rear cover 300 and the third protective member 236 do not directly contact each other.

FIG. 14A is a rear view illustrating an unfolded state of an electronic device according to an embodiment.

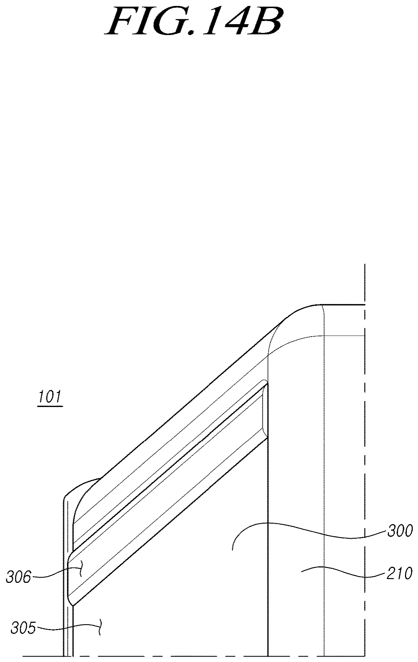

FIG. 14B is an enlarged perspective view illustrating an area of a rear cover and a rear surface of a first housing of the electronic device of FIG. 14A according to an embodiment.

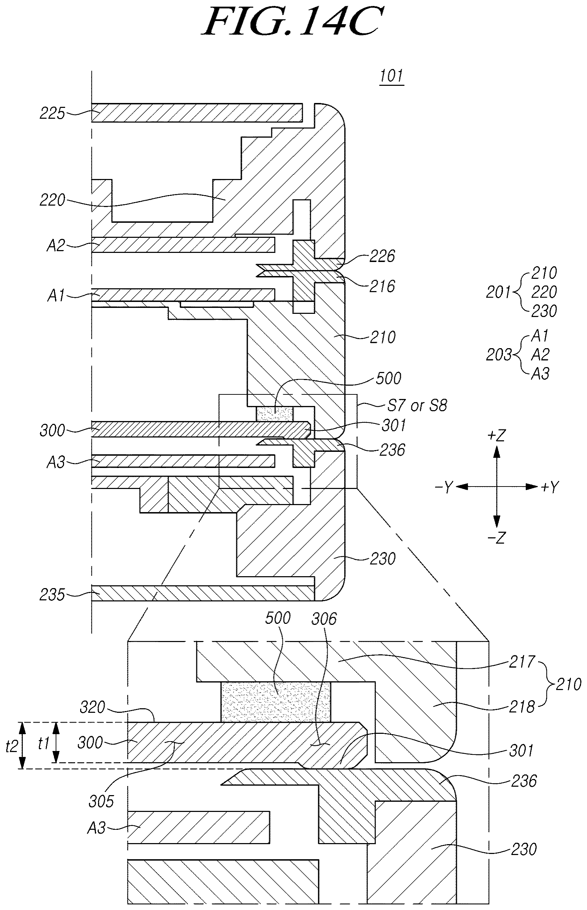

FIG. 14C is a cross-sectional view taken along A-A' of the electronic device of FIG. 3A, and an enlarged view of an area S7 of the cross-sectional view according to an embodiment.

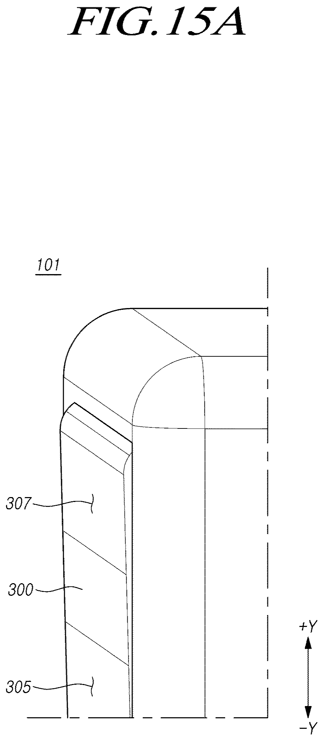

FIG. 15A is an enlarged perspective view illustrating an area of a rear cover and a rear surface of a first housing of the electronic device of FIG. 14A according to an embodiment.

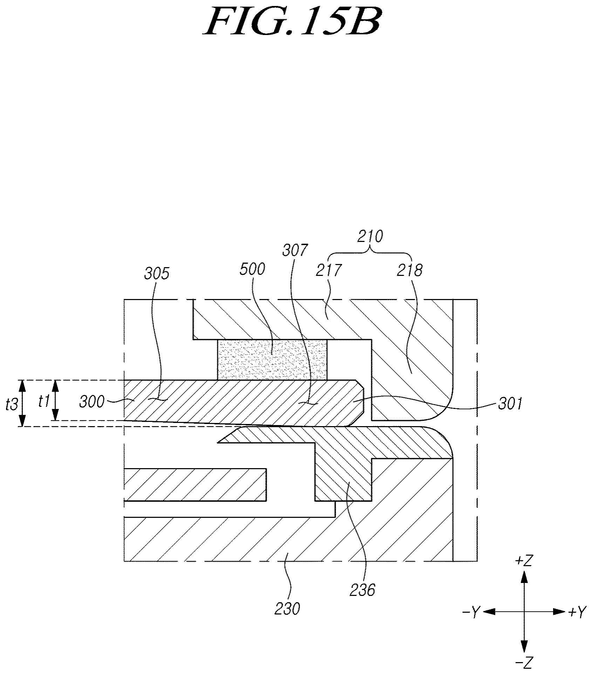

FIG. 15B is an enlarged view illustrating an area S8 of the cross-sectional view of FIG. 14C according to an embodiment.

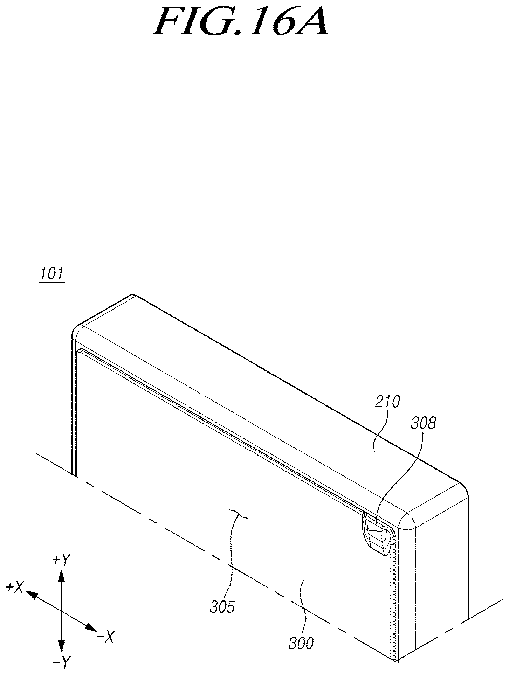

FIG. 16A is an enlarged perspective view illustrating an area of a rear cover and a rear surface of a first housing of the electronic device of FIG. 14A according to an embodiment.

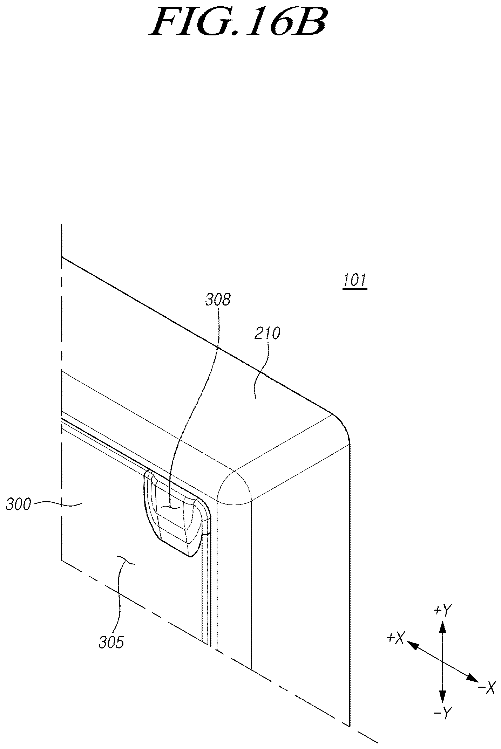

FIG. 16B is an enlarged view illustrating the rear cover corner area of FIG. 16A according to an embodiment.

Referring to FIGS. 14A to 16B, an electronic device 101 may include a foldable housing 201 including a first housing 210, a second housing 220, and a third housing 230. The electronic device 101 may include a flexible display (e.g., the flexible display 203 of FIG. 2A) disposed in the forward direction of the first housing 210, the second housing 220, and the third housing 230, and a protective member covering the edge portion of the flexible display 203. The protective member may include a first protective member 216 disposed on the first housing 210, a second protective member 226 disposed on the second housing 220, and a third protective member 236 disposed on the third housing 230.

Referring to FIGS. 14A to 16B, the electronic device 101 may include a rear cover 300 covering the rear surface (or side) of the first housing 210.

The components of the electronic device 101 of FIGS. 14A to 16B may be identical in whole or part to the components of the electronic device 101 of FIGS. 2A to 11.

The embodiments of FIGS. 14A to 16B may be selectively combined with the embodiments of FIGS. 1 to 13C and the embodiments of FIGS. 15A to 22B.

Hereinafter, in FIGS. 14A to 16B, a configuration in which the shape of the rear cover 300 is changed, and the impact-absorbing member 400 is excluded disposed on the first housing 210 is described, unlike the electronic device 101 of FIGS. 6 and 11.

According to an embodiment, the electronic device 101 may include a first display area A1 of the flexible display 203 disposed on the first housing 210 in a forward direction (e.g., +Z-axis direction), and a rear cover 300 disposed in a rear direction (e.g., -Z-axis direction).

According to an embodiment, the rear cover 300 may include one surface 310 exposed to the outside and the other surface 320 facing the inside of the electronic device 101 in the unfolded state of the electronic device 101. When the electronic device 101 is in the folded state, the one surface 310 of the rear cover 300 may be disposed to face (e.g., oppose) the third display area A3 of the third housing 230 not to be exposed to the outside. When the electronic device 101 is in the folded state, at least a portion of the rear cover 300 may contact the third protective member 236 covering the third display area A3, and may include an elastic material and/or an injection-molded material to mitigate an impact generated during contact.

According to an embodiment, the rear cover 300 may include an elastic material such as rubber, silicone, urethane, elastomer, spandex, or foam. According to an embodiment, the rear cover 300 may include at least one of polypropylene, polyethylene, polystyrene, acrylonitrile butadiene styrene, polycarbonate, or nylon.

According to an embodiment, the other surface 320 of the rear cover 300 may form a flat surface (or side) and, as an adhesive member 500 is disposed along an edge, be attached onto the first support plate 217 of the first housing 210. According to an embodiment, one surface (or side) of the rear cover 300 may have a shape protruding (e.g., extending outward) more than another area in a partial area (e.g., the edge portion 301). Accordingly, only a partial area, rather than the whole of the one surface (or side) of the rear cover 300, may contact the third protective member 236.

According to an embodiment (see FIG. 14B and FIG. 14C), the rear cover 300 may include a first area 305 having a first thickness t1 and a second area 306 having a second thickness t2, which is larger than the first thickness t1. The first thickness t1 and the second thickness t2 may have a designated size. A boundary surface between the first thickness t1 and the second thickness t2 may be stepped (e.g., shaped in stepwise manner) or may form a curved surface (or side).

According to an embodiment, the second area 306 of the rear cover 300 may be a portion of an edge area of the rear cover 300. When viewed from above the rear cover 300, the second area 306 may be formed to surround at least a portion of the first area 305. For example, the second area 306 may have a closed loop shape along the edge of the first area 305. For example, the second area 306 may be formed only at an upper or lower edge of the rear cover 300.

According to an embodiment, the second area 306 may directly contact the third protective member 236 in the folded state of the electronic device 101. The first area 305 may be spaced apart without contacting the third protective member 236 and/or the third display area A3 in the folded state of the electronic device 101.

According to an embodiment (see FIG. 15A and FIG. 15B), the rear cover 300 may include a first area 305 having a first thickness t1 and a third area 307 having a third thickness t3, which is larger than the first thickness t1. The first thickness t1 may have a designated size, and the third thickness t3 may be a variable thickness and may form an inclined surface (or side). For example, the third area 307 may extend from one end of the first area 305 to the edge of the rear cover 300. For example, when looking at the cross section of FIG. 15B, the third area 307 may have a slope that sequentially decreases toward the center from the edge of the rear cover 300 (e.g., toward the -Y-axis direction).

According to an embodiment, the third area 307 of the rear cover 300 may be a portion of an edge area of the rear cover 300. When viewed from above the rear cover 300, the third area 307 may be formed to surround at least a portion of the first area 305. For example, the third area 307 may have a closed loop shape along the edge of the first area 305. For example, the third area 307 may be formed only at an upper or lower edge of the rear cover 300.

According to an embodiment, a portion of the third area 307 may contact the third protective member 236 in the folded state of the electronic device 101. For example, a portion of the third area 307 having the largest thickness may directly contact the third protective member 236. The first area 305 may be spaced apart without contacting the third protective member 236 and/or the third display area A3 in the folded state of the electronic device 101.

According to an embodiment (see FIG. 16A and FIG. 16B), the rear cover 300 may include a first area 305 having a first thickness t1 and a fourth area 308 having a fourth thickness t4, which is larger than the first thickness t1. The first thickness t1 may have a designated size, and the fourth thickness t4 may be a variable thickness, and may form an inclined surface (or side).

According to an embodiment, the fourth area 308 of the rear cover 300 may be a corner area of the rear cover 300. When viewed from above the rear cover 300, the fourth area 308 may be formed only in the right (e.g., +X-axis direction) corner of the upper edge of the rear cover 300 and/or the right (e.g., +X-axis direction) corner of the lower edge of the rear cover 300. For example, the fourth area 308 may have a slope that decreases sequentially toward the center from the edge of the rear cover 300 (e.g., toward the -X-axis direction and toward the -Y-axis direction). For example, the fourth area 308 may form the largest thickness (e.g., the largest thickness of the fourth thickness t4) of the portion contacting the third protective member 236, and the surrounding area may have a thickness that decreases sequentially.

According to an embodiment, the rear cover 300 may be referred to as a deco plate, and the deco plate may be formed of a mixed material including glass. For example, the portion forming the plane of the decor plate may include a member that provides visual beauty such as glass or ceramic, and the protruding portion other than the portion forming the plane may include a member including an elastic material (e.g., polycarbonate, polyethylene terephthalate).

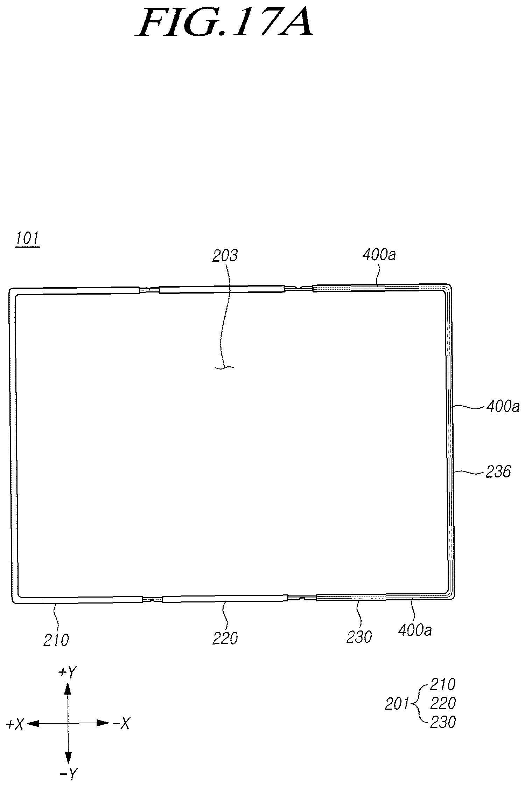

FIG. 17A is a front view illustrating an unfolded state of an electronic device according to an embodiment.

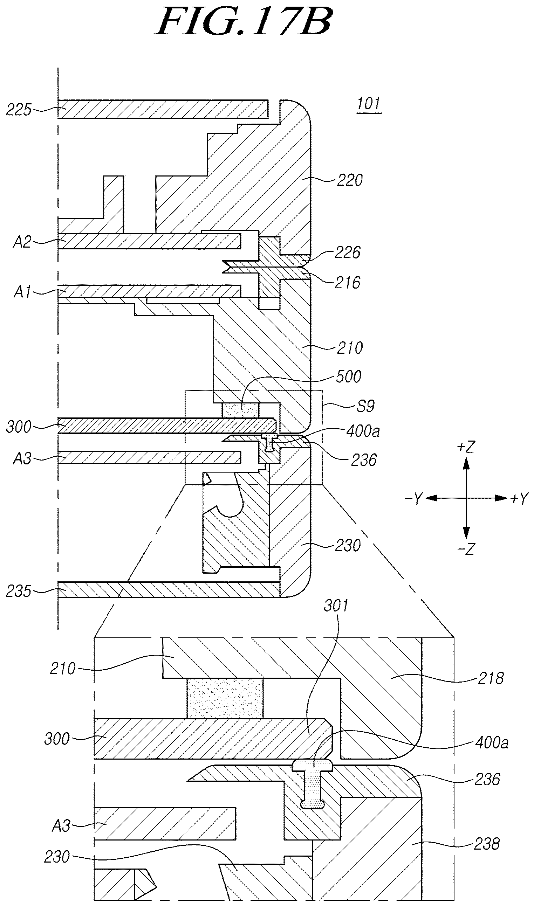

FIG. 17B is a cross-sectional view taken along A-A' of the electronic device of FIG. 3A, and an enlarged view of an area S6 of the cross-sectional view according to an embodiment.

Referring to FIGS. 17A and 17B, an electronic device 101 may include a foldable housing 201 including a first housing 210, a second housing 220, and a third housing 230. The electronic device 101 may include a flexible display 203 disposed in the forward direction of the first housing 210, the second housing 220, and the third housing 230, and a protective member covering an edge portion of the flexible display 203. The protective member may include a first protective member 216 disposed on the first housing 210, a second protective member 226 disposed on the second housing 220, and a third protective member 236 disposed on the third housing 230.

Referring to FIGS. 17A and 17B, the electronic device 101 may include a rear cover 300 covering the rear surface (or side) of the first housing 210. The electronic device 101 may include a third protective member 236 disposed on the third housing 230 to cover an edge portion of the third display area A3 disposed in the forward direction of the third housing 230 and a first impact-absorbing member 400a disposed in one area of the third protective member 236.

The components of the electronic device 101 of FIGS. 17A and 17B may be identical in whole or part to the components of the electronic device 101 of FIGS. 2A to 11.

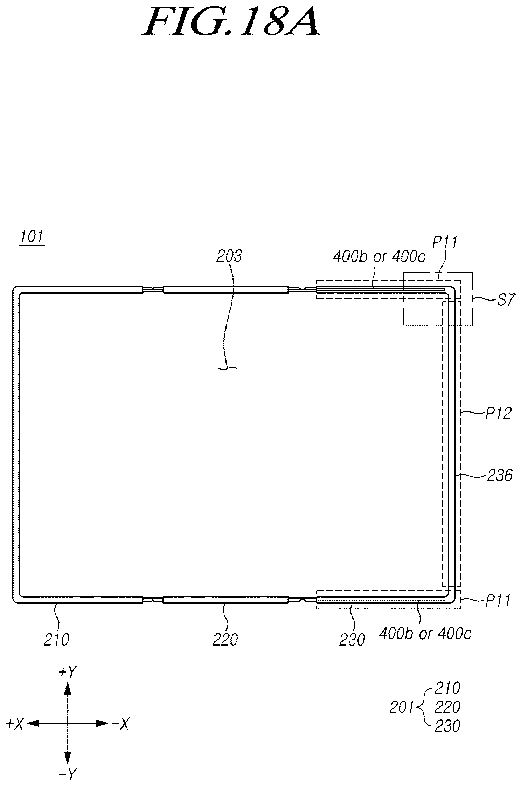

The embodiments of FIGS. 17A and 17B may be selectively combined with the embodiments of FIGS. 1 to 16B and the embodiments of FIGS. 18A to 22B.

Hereinafter, in FIGS. 17A and 17B, a configuration associated with the shape of the first impact-absorbing member 400a disposed on the front surface 236a of the third protective member 236 and its adjacent structures is described, unlike the position (e.g., disposed on the edge portion 301 of the rear cover 300) of the first impact-absorbing member 400a of FIGS. 6 to 11.

According to an embodiment, in the folded state of the electronic device 101 (e.g., see FIGS. 3A to 3D), the rear surface (or side) of the first housing 210 may be disposed to face (e.g., oppose) the front surface (or side) of the third housing 230. For example, the first housing 210 and the rear cover 300 may be disposed to face (e.g., oppose) the third display area (e.g., the third display area A3 of FIG. 2A) of the flexible display 203 facing the forward direction of the third housing 230 and the third protective member (e.g., the third protective member 236 of FIGS. 2A and 2B). For example, the third protective member 236 may have a shape protruding in the forward direction further than the third housing 230 and the third display area A3. The protruding first impact-absorbing member 400a may be positioned on the front surface (or side) of the third protective member 236 to prevent impact (e.g., damage to the outer surface due to friction and squeaking noise due to friction) due to direct contact to the rear cover 300 and the first housing 210 that the third protective member 236 faces (e.g., opposes).

According to an embodiment, at least a portion of the first impact-absorbing member 400a may be disposed on the third protective member 236 so as to contact the rear cover 300. According to an embodiment, the first impact-absorbing member 400a may be disposed along the edge portion 301 of the rear cover 300 (or to face (e.g., oppose) the edge portion 301) in the folded state of the electronic device 101 to protect the edge portion 301 of the rear cover 300. The first impact-absorbing member 400a may be formed in the shape of one closed loop, or may be formed in a plurality of pieces separately disposed.

According to an embodiment, when the first impact-absorbing member 400a contacts the edge portion 301 of the rear cover 300, damage to the edge portion 301 may be prevented by mitigating an impact. For example, the edge portion 301 of the rear cover 300 may be one area of the rear surface (or side) of the rear cover 300 facing the third display area A3 and the third protective member 236.

According to an embodiment, when viewed from the front surface of the third housing 230, the third protective member 236 may be formed to surround an edge portion of the third display area A3 to cover the third display area A3. For example, when viewed from the front of the flexible display 203, the third protective member 236 may have a shape ']'. The third protective member 236 may be positioned along an upper side (e.g., +Y-axis direction), a lower side (e.g., -Y-axis direction), and a right side (e.g., +X-axis direction) of the edge of the third display area A3, and may have an open side facing the second display area A2.

According to an embodiment, the first impact-absorbing member 400a may be disposed to correspond to the shape of the third protective member 236. For example, when viewed from the front of the flexible display 203, the first impact-absorbing member 400a may have a shape ']'. The first impact-absorbing member 400a may be positioned along an upper side (e.g., +Y-axis direction), a lower side (e.g., -Y-axis direction), and a right side (e.g., +X-axis direction) of the edge of the third display area A3, and may have an open side facing the second display area A2.

According to an embodiment, the third protective member 236 and the first impact-absorbing member 400a may be manufactured through a double injection-molding process. For example, the third protective member 236 may include a material such as PC, PET, or urethane, and the first impact-absorbing member 400a may include an elastic material such as rubber, silicone, urethane, elastomer, spandex, or foam.

According to an embodiment, according to the double injection-molded structure, a portion of the first impact-absorbing member 400a may have a shape inserted into the third protective member 236, and another portion may protrude to the outside.

According to an embodiment, in the folded state of the electronic device 101, the first impact-absorbing member 400a and the rear cover 300 are arranged to face (e.g., oppose) each other and may at least partially contact each other. According to an embodiment, the exposed area of the first impact-absorbing member 400a may include a flat surface (or side) in direct contact with the rear cover 300 and surfaces inclined from the flat surface (or side) toward the third protective member 236.

According to an embodiment, in the folded state of the electronic device 101, the first impact-absorbing member 400a protrudes further than the third protective member 236 and the third side wall 238 of the third housing 230, so that the third protective member 236 and the facing rear cover 300 may be spaced apart from each other.

According to an embodiment, in the folded state of the electronic device 101, the first impact-absorbing member 400a protrudes further than the third protective member 236 and the third side wall 238 of the third housing 230, so that the third protective member 236 and the facing first side wall 218 of the first housing 210 may be spaced apart from each other.

FIG. 18A is a front view illustrating an unfolded state of an electronic device according to an embodiment.

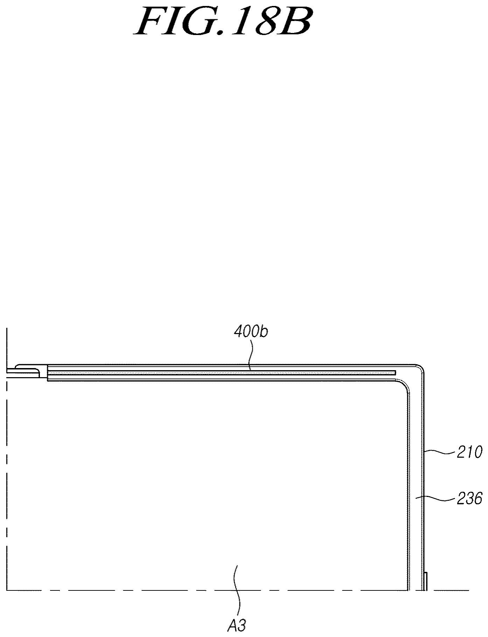

FIG. 18B is an enlarged view illustrating an area S7 of the electronic device of FIG. 18A according to an embodiment.

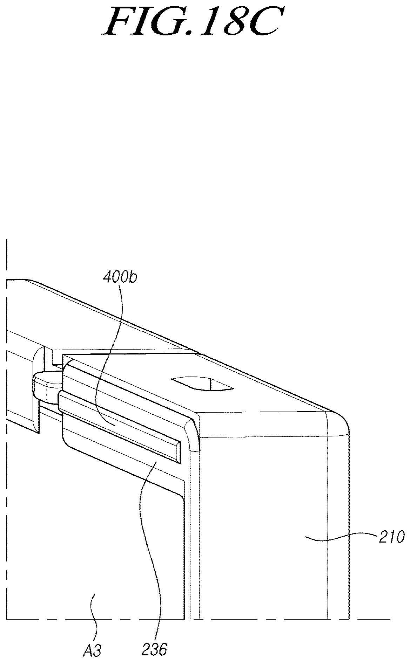

FIG. 18C is a perspective view illustrating an area S7 of the electronic device of FIG. 18A according to an embodiment.

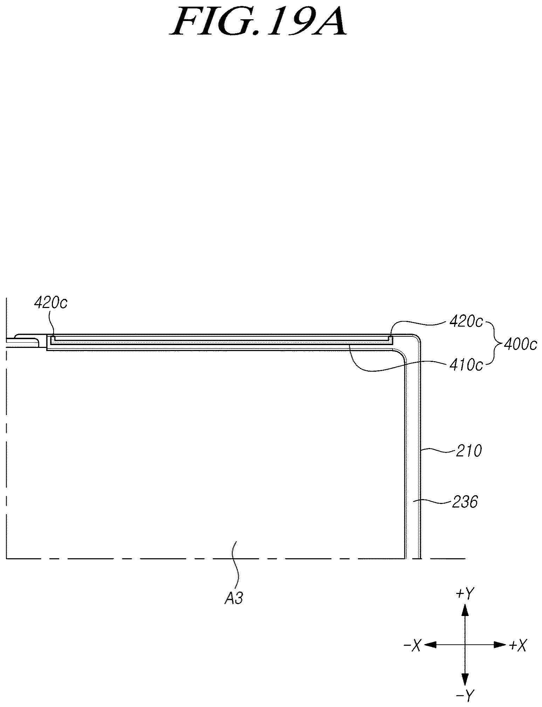

FIG. 19A is an enlarged view illustrating an area S7 of the electronic device of FIG. 18A according to an embodiment.

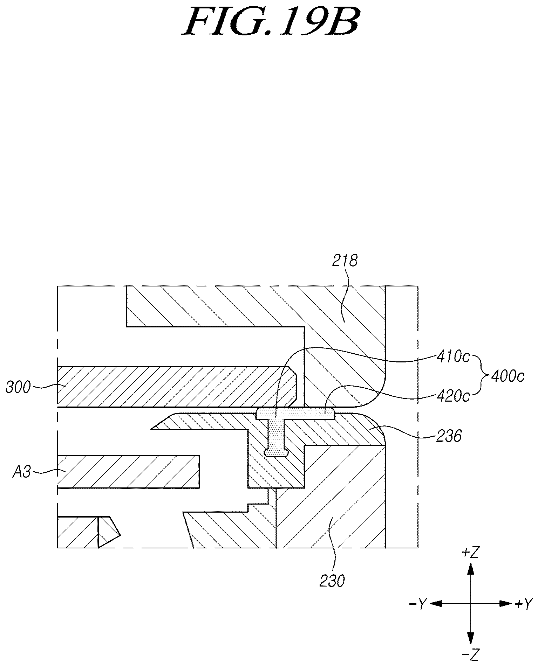

FIG. 19B is a view illustrating a portion of the cross-sectional view taken along A-A' of the electronic device of FIG. 3A according to an embodiment.

Referring to FIGS. 18A to 19B, an electronic device 101 may include a foldable housing 201 including a first housing 210, a second housing 220, and a third housing 230. The electronic device 101 may include a flexible display 203 disposed in the forward direction of the first housing 210, the second housing 220, and the third housing 230, and a protective member covering an edge portion of the flexible display 203. The protective member may include a first protective member 216 disposed on the first housing 210, a second protective member 226 disposed on the second housing 220, and a third protective member 236 disposed on the third housing 230.

Referring to FIGS. 18A to 19B, the electronic device 101 may include a rear cover 300 covering the rear surface (or side) of the first housing 210. The electronic device 101 may include a third protective member 236 disposed on the third housing 230 and an impact-absorbing member (second impact-absorbing member 400b or third impact-absorbing member 400c) disposed in one area of the third protective member 236 to cover an edge portion of the third display area A3 disposed in the forward direction of the third housing 230.

The components of the electronic device 101 of FIGS. 18A to 19B may be identical in whole or part to the components of the electronic device 101 of FIGS. 2A to 17B.

The embodiments of FIGS. 18A and 19B may be selectively combined with the embodiments of FIGS. 1 to 17B and the embodiments of FIGS. 19A to 22B.

Hereinafter, in FIGS. 18A to 19B, unlike the shape (e.g., a closed loop) of the impact-absorbing member 400 of FIGS. 17A and 17B, a configuration associated with the shape of the impact-absorbing member 400 disposed on an upper side and/or lower side of the electronic device 101 and its adjacent structures is described.

According to an embodiment (see FIG. 18A), in the unfolded state of the electronic device 101, when looking in the forward direction of the third housing 230, the area of the third protective member 236 where the third protective member 236 and the rear cover 300 face (or contact) may be defined as a contact section P11. Further, the area of the third protective member 236 where the third protective member 236 and the rear cover 300 do not face (or contact) may be defined as a contactless section P12. The third protective member 236 and the first side wall 218 of the first housing 210 may face (or contact) each other in the contactless area.

According to an embodiment, the second impact-absorbing member 400b (or the third impact-absorbing member 400c) may be disposed along an upper edge portion (e.g., an edge portion in the +Y-axis direction) and/or a lower edge portion (e.g., an edge portion in the -Y-axis direction) of the third protective member 236. For example, the second impact-absorbing member 400b (or the third impact-absorbing member 400c) may be disposed to cover a portion of the upper edge portion and/or the lower edge portion of the third protective member 236. The second impact-absorbing member 400b (or the third impact-absorbing member 400c) may be disposed to face (e.g., oppose) the upper edge portion and/or the lower edge portion of the rear cover 300. For example, in the folded state of the electronic device 101, the impact-absorbing member 400 and the rear cover 300 are arranged to face (e.g., oppose) each other, and may at least partially contact each other.

According to an embodiment, the rear surface (or side) of the first housing 210 may be disposed to face (e.g., oppose) the front surface (or side) of the third housing 230. For example, the first housing 210 and the rear cover 300 may be disposed to face (e.g., oppose) the third display area A3 of the flexible display 203 facing the forward direction of the third housing 230 and the third protective member 236. For example, the rear cover 300 may have a shape protruding further than the first housing in the rear direction, and the second impact-absorbing member 400b (or third impact-absorbing member 400c) may be positioned to protrude in the forward direction of the third protective member 236 to prevent impact due to direct contact between the rear cover 300 and the third protective member 236.

According to an embodiment (see FIG. 18B and FIG. 18C), the second impact-absorbing member 400b may have a line shape having a predetermined thickness disposed along a central area of the third protective member 236 when the third protective member 236 is viewed from above. The impact-absorbing member 400 may be disposed along the X-axis direction, and the central area of the third protective member 236 may contact the rear cover 300 in the folded state of the electronic device 101.

According to an embodiment (see FIG. 19A and FIG. 19B), the third impact-absorbing member 400c may include a first contact area 410c disposed along the central area of the third protective member 236 and a second contact area 420c extending upward (e.g., +Y-axis direction) from one or two opposite ends of the first contact area 410c when the third protective member 236 is viewed from above. For example, the first contact area 410c of the impact-absorbing member 400 may have a line shape disposed along the X-axis direction and having a predetermined thickness disposed along the central area. The second contact area 420c of the impact-absorbing member 400 may have a line shape disposed along the Y-axis direction and having a predetermined thickness. The first contact area 410c may be substantially perpendicular to the second contact area 420c.

According to an embodiment (see FIG. 19A and FIG. 19B), the second contact area 420c of the third impact-absorbing member 400c may be an area that is designed to be extended to an area other than the first contact area 410c to support the first housing 210 in some sections. Due to the second contact area 420c of the third impact-absorbing member 400c, overpressing by the first side wall 218 of the first housing 210 may be prevented or reduced. For example, the first contact area 410c of the third impact-absorbing member 400c may be formed to contact the edge portion 301 of the rear cover 300. For example, the first contact area (410c) of the third shock absorbing member (400c) may be formed to contact the edge portion (301) of the rear cover (300). The second contact area 420c of the third impact-absorbing member 400c may be formed to contact the first side wall 218 of the first housing 210.

According to an embodiment, in the folded state of the electronic device 101, the third protective member 236 may be disposed to be spaced apart from the first side wall 218 of the first housing 210 and/or the rear cover 300 without contacting it, by the second impact-absorbing member 400b (or the third impact-absorbing member 400c).

According to an embodiment, the second impact-absorbing member 400b (or the third impact-absorbing member 400c) is disposed only on the upper and lower edge portions 301 of the rear cover 300 where the rear cover 300 and the third protective member 236 substantially face (e.g., oppose) each other, so that the peripheral black matrix of the flexible display 203 (e.g., the third display area A3) does not look wide, and enhanced design aesthetics may be provided. Further, the size of the second impact-absorbing member 400b (or the third impact-absorbing member 400c) may be reduced to save materials and enhance work efficiency.

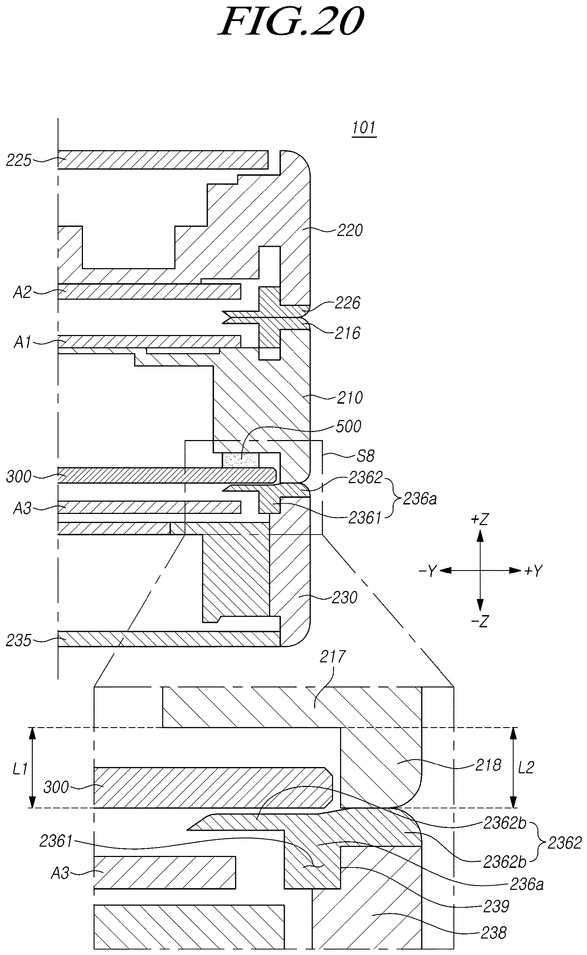

FIG. 20 is a cross-sectional view taken along A-A' of the electronic device of FIG. 3A, and an enlarged view of an area S8 of the cross-sectional view according to an embodiment.

Referring to FIG. 20, an electronic device 101 may include a foldable housing 201 including a first housing 210, a second housing 220, and a third housing 230. The electronic device 101 may include a flexible display 203 disposed in the forward direction of the first housing 210, the second housing 220, and the third housing 230, and a protective member covering an edge portion of the flexible display 203. The protective member may include a first protective member 216 disposed on the first housing 210, a second protective member 226 disposed on the second housing 220, and a 3-1th protective member 236a disposed on the third housing 230.

The components of the electronic device 101 of FIG. 20 may be identical in whole or part to the components of the electronic device 101 of FIGS. 2A to 17B.

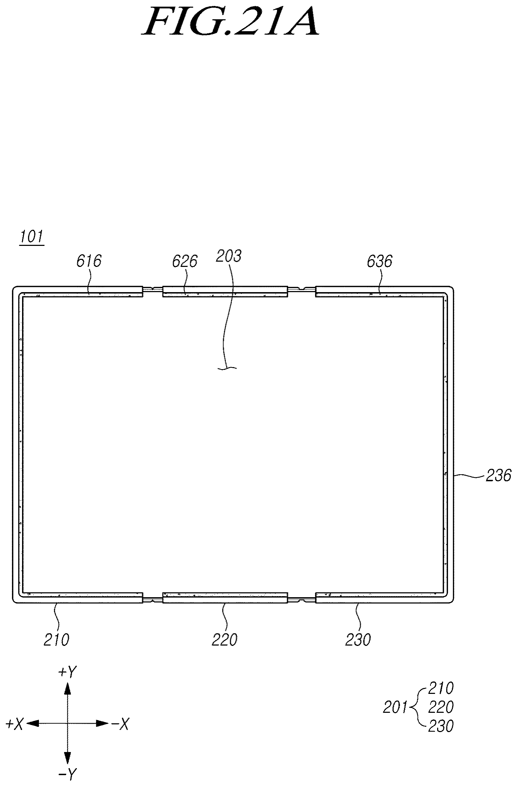

The embodiments of FIG. 20 may be selectively combined with the embodiments of FIGS. 1 to 19B and the embodiments of FIGS. 21A to 22B.

Hereinafter, in FIG. 20, unlike the shape of the 3-1th protective member 236a, with the impact-absorbing member 400 excluded unlike the electronic device of FIGS. 6 to 11, a configuration associated with the shape of the 3-1th protective member 236a having a thicker side and its adjacent structures, is described.

Referring to FIG. 20, the electronic device 101 may include a rear cover 300 that covers the rear surface (or side) of the first housing 210. The electronic device 101 may include a 3-1th protective member 236a disposed on the third housing 230 to cover an edge portion of the third display area A3 disposed in the forward direction of the third housing 230.

According to an embodiment, in the folded state of the electronic device 101, the 3-1th protective member 236a may cover the edge of the third display area A3 so that the third display area A3 of the flexible display 203 does not collide with the rear cover 300 (or the first housing 210). The 3-1th protective member 236a may cover an edge (e.g., the third side wall 238) of the third housing 230 to protect the third housing 230.

According to an embodiment, in the folded state of the electronic device 101, the rear cover 300 has weaker rigidity than the first housing 210, so that the first side wall 218 of the first housing 210 may protrude further than the rear cover 300 in the rear direction (e.g., -Z-axis direction) to prevent the rear cover 300 from colliding with the 3-1th protective member 236a. For example, when L1 is defined as the distance between the rear surface (or side) of the rear cover 300 and the first support plate 217 of the first housing 210, and L2 is defined as the distance between the first support plate 217 of the first housing 210 and one end of the first side wall 218, L1 may be smaller than L2.

According to an embodiment, the 3-1th protective member 236a may include a first protective portion 2361 and a second protective portion 2362. The first protective portion 2361 may be positioned inside the third housing 230 and may support the 3-1th protective member 236a. For example, the first protective portion 2361 may be inserted into the recess 239 of the third housing 230 to couple the 3-1th protective member 236a to the third housing 230. The second protection portion 2362 may extend from one end of the first protection portion 2361 and may substantially cover the edge of the front surface of the third display area A3 and the edge of the third housing 230. When looking at the cross section of FIG. 20, the first protection portion 2361 and the second protection portion 2362 may extend substantially in the vertical direction.

According to an embodiment, in the folded state of the electronic device 101, since the rear cover 300 has weaker rigidity than the first housing 210, the thickness of the second protective portion 2362 of the 3-1th protective member 236a may be formed to differ to prevent the rear cover 300 from colliding with the 3-1th protective member 236a.

According to an embodiment, the second protection portion 2362 of the 3-1th protective member 236a may include an inner portion 2362a extending toward the third display area A3 and an outer portion 2362b extending toward a side wall of the third housing 230. The thickness of the outer portion 2362b of the second protection portion 2362 may be designed to be larger than the thickness of the inner portion 2362a. Accordingly, in the folded state (or folding operation) of the electronic device 101, the rear cover 300 may facilitate contact between the first side wall 218 and the outer portion 2362b of the 3-1th protective member 236a protruding to each other in the facing directions without contacting the 3-1th protective member 236a.

FIG. 21A is a front view illustrating an unfolded state of an electronic device according to an embodiment.

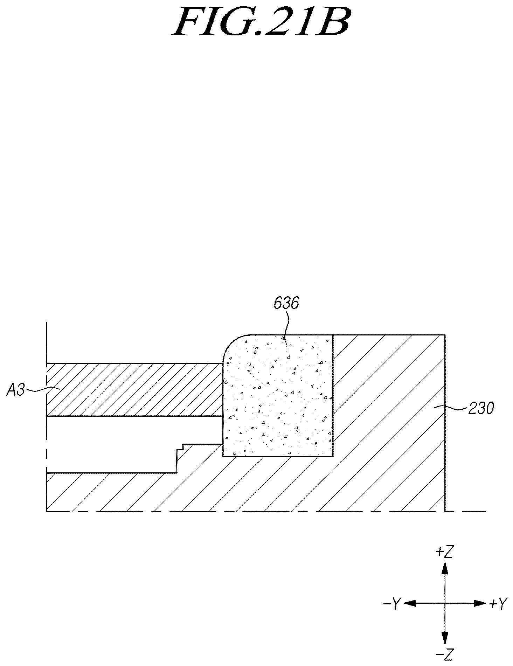

FIG. 21B is an enlarged cross-sectional view illustrating an area S9 and a front surface of a third housing of the electronic device of FIG. 21A according to an embodiment.

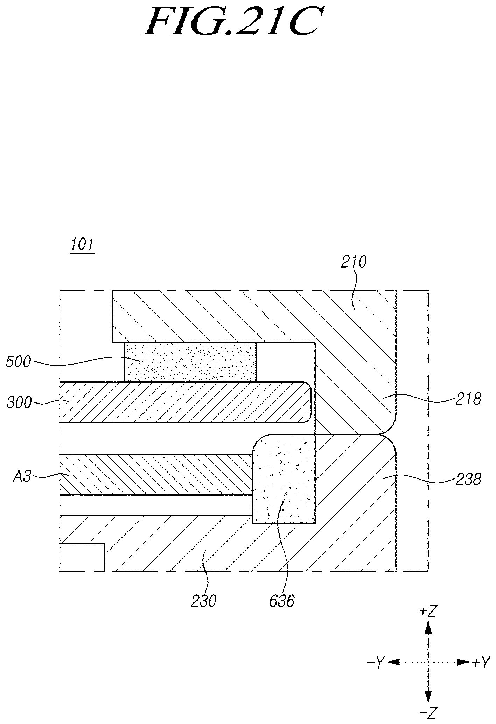

FIG. 21C is an enlarged cross-sectional view illustrating a portion of the electronic device of FIG. 21A in a folded state according to an embodiment.

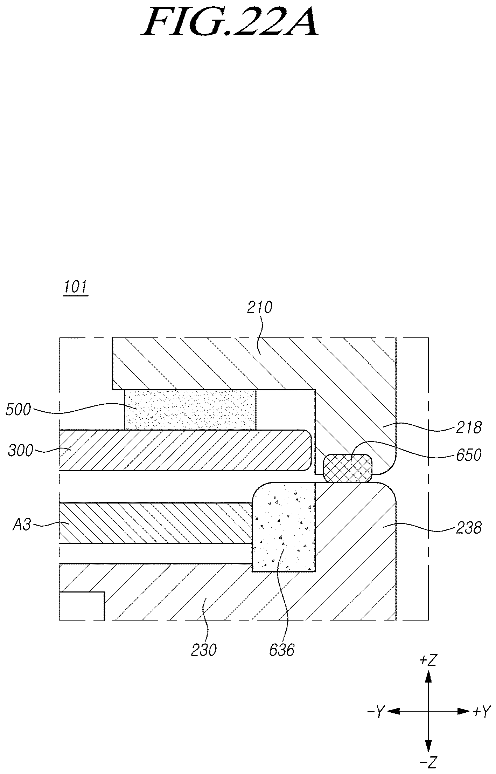

FIG. 22A is an enlarged cross-sectional view illustrating a portion of the electronic device of FIG. 21A in a folded state according to an embodiment.

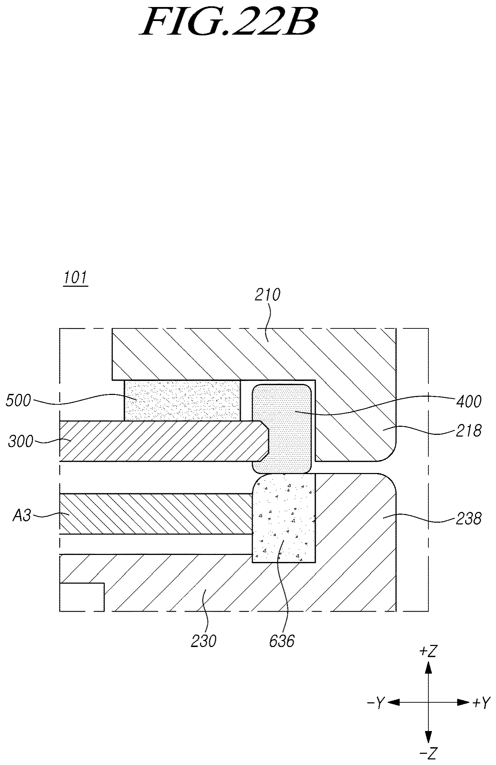

FIG. 22B is an enlarged cross-sectional view illustrating a portion of the electronic device of FIG. 21A in a folded state according to an embodiment.

Referring to FIGS. 21A to 22B, an electronic device 101 may include a foldable housing 201 including a first housing 210, a second housing 220, and a third housing 230. The electronic device 101 may include a flexible display 203 disposed in the forward direction of the first housing 210, the second housing 220, and the third housing 230, and a protective member covering an edge portion of the flexible display 203. The protective member may include a first gap filling member 616 disposed on the first housing 210, a second gap filling member 626 disposed on the second housing 220, and a third gap filling member 636 disposed on the third housing 230.

The components of the electronic device 101 of FIGS. 21A to 22B may be identical in whole or part to the components of the electronic device 101 of FIGS. 2A to 11.

The embodiments of FIGS. 21A to 22B may be selectively combined with the embodiments of FIGS. 1 to 20.

Hereinafter, in FIGS. 21A to 22B, unlike the electronic device 101 disclosed in FIGS. 6 to 11, the protective member disposed on the housings 210, 220, and 230 may be excluded and replaced with a gap filling member, which is described. The third housing 230 and the third gap filling member 636 disposed thereon are described, and the above description may be applied to the first and second housings 210 and 220, respectively, and the first and second gap filling members 616 and 626, respectively.

According to an embodiment, the gap filling member may be disposed on each housing (e.g., the first, second, and third housings 210, 220, and 230) to prevent contact between the flexible display areas (e.g., the first display area A1 and the second display area A2) facing each other or between one area (e.g., the third display area A3) of the flexible display and the rear cover 300 facing each other in the folded state of the electronic device 101.

According to an embodiment, the electronic device 101 may include a rear cover 300 covering the rear surface (or side) of the first housing 210. The electronic device 101 may include a third gap filling member 636 disposed on the third housing 230 to cover an edge portion of the third display area A3 disposed in the forward direction of the third housing 230.

According to an embodiment, the third gap filling member 636 may be formed by injection molding, dispensing, compression molding, extrusion molding, or 3D printing performed to fill a gap between the edge of the flexible display 203 (e.g., the third display area A3) and the third side wall 238 of the third housing 230. In the injection molding, the material for the third gap filling member 636 may be one of sealant, epoxy, urethane foam, silicone, or putty.

According to an embodiment, the length of the third gap filling member 636 in the +Z-axis direction may be longer than or equal to the length of the third side wall 238 of the third housing 230 in the +Z-axis direction. The length of the third gap filling member 636 in the +Z-axis direction may protrude further than (e.g., extend outward from) the front surface (e.g., one surface facing the +Z-axis) of the third display area A3. Accordingly, in the folded state of the electronic device 101, the first side wall 218 of the first housing 210 protruding further than the rear cover 300 may contact the side wall of the third housing 230 or the third gap filling member 636.

According to an embodiment, the third gap filling member 636 may be disposed to face (e.g., oppose) an edge portion of the third display area A3. Accordingly, in the folded state of the electronic device 101, even if the rear cover 300 is partially pushed in the -Z-axis direction by impact, it may contact the third gap filling member 636 protruding further than the third display area A3.

According to an embodiment, by replacing the edge of the flexible display 203 with the third gap filling member 636 instead of the protective member formed of plastic, it is possible to enhance the design aesthetics of providing a wide display without causing the surrounding black matrix of the flexible display 203 (e.g., the third display area A3) to look wide. Further, it is possible to save materials and enhance work efficiency by excluding protective members formed of plastic.

According to an embodiment, only the third gap filling member 636 disposed to surround the edge of the third display area A3 within the third housing 230 has been described, but the disclosure is not limited thereto, and the above description may also be applied to the gap filling member disposed to surround the edge of the first display area A1 within the first housing 210 or to surround the edge of the second display area A2 within the second housing 220.

According to an embodiment (see FIG. 22a), a damper 650 may be disposed on the first side wall 218 of the first housing 210 and/or the third side wall 238 of the third housing 230. The damper 650 may include an elastic material. For example, the damper 650 may include at least one of rubber, silicone, urethane, elastomer, spandex, or foam.

According to an embodiment (see FIG. 22A), in the folded state of the electronic device 101, the damper 650 is disposed between the first side wall 218 of the first housing 210 and/or the third side wall 238 of the third housing 230, thereby preventing collision and contact between the first side wall 218 of the first housing 210 and/or the third side wall 238 of the third housing 230.

According to an embodiment (see FIG. 22B), an impact-absorbing member 400 that covers the edge portion 301 of the rear cover 300 and is disposed on the first housing 210 may be included. The configuration of the impact-absorbing member 400 of FIGS. 6 to 11 may be applied to the impact-absorbing member 400. The impact-absorbing member 400 may protrude further from one surface 310 of the rear cover 300.

According to an embodiment (see FIG. 22B), in the folded state of the electronic device 101, the impact-absorbing member 400 may be disposed to face (e.g., oppose) and contact the third gap filling member 636. Accordingly, in the folded state of the electronic device 101, collision and contact between the first side wall 218 of the first housing 210 and/or the third side wall 238 of the third housing 230 may be prevented. Further, in the folded state of the electronic device 101, collision and contact between the rear cover 300 and the third display area A3 may be prevented.

In general, an electronic device (e.g., a multi-foldable electronic device) including a flexible display may include a plurality of housings and a protective member (e.g., front deco) disposed along the edge of the housing. In the folding operation of the multi-fold electronic device, the rear cover of one housing and the protective member of another housing may collide with each other, causing frictional noise (e.g., squeaky noise) or damaging (e.g., breaking and/or scratching) the surface (or side) of the rear cover.

The multi-fold electronic device according to an embodiment may protect the edge of the rear cover by disposing the impact-absorbing member along the edge of the rear cover facing the protective member (e.g., front deco) in the folded state. Further, the impact-absorbing member may protect each component by spacing the rear cover and the flexible display apart from each other by a shape protruding further than the rear cover.

The multi-fold electronic device according to an embodiment may selectively dispose the impact-absorbing member in the area that may contact the protective member (e.g., front deco) in the folded state to increase the area in which the rear cover is exposed to the outside and reduce the black matrix area to enhance design aesthetics.

The multi-fold electronic device according to an embodiment may protect components (e.g., the protective member or the flexible display) in contact with the rear cover by including an elastic or injection-molded material as the material of the rear cover that may contact the protective member (e.g., the front deco) in the folded state.

In the multi-fold electronic device according to an embodiment, the impact-absorbing member may be disposed on the protective member to protect the rear cover that may contact the protective member (e.g., front deco) in the folded state. Accordingly, when the impact-absorbing member and the rear cover contact each other, damage (e.g., breakage and/or scratch) to the rear cover may be prevented.

Effects obtainable from embodiments of the disclosure are not limited to the above-mentioned effects, and other effects not mentioned may be apparent to one of ordinary skill in the art from the following description.

An electronic device according to an embodiment of the disclosure may comprise a multi-foldable housing 201. The multi-foldable housing 201 may include a second housing component 220, a first housing component 210 rotatably connected to one side surface of the second housing component, a third housing component 230 rotatably connected to another side surface of the second housing component, a first in-folding hinge 240 disposed between the second housing component and the first housing component, and a second in-folding hinge 250 disposed between the second housing component and the third housing component and having a width wider than the first in-folding hinge. The electronic device may comprise a flexible display 203 disposed toward a front surface of the first housing component, the second housing component, and the third housing component, a protective member 236 covering an edge portion of the flexible display and disposed on the third housing component, a rear cover 300 disposed toward a rear surface of the first housing component and forming an exterior of the electronic device, and an impact-absorbing member 400 disposed on the first housing component to cover an edge portion of the rear cover. When the rear cover and a portion of the flexible display are disposed to face (e.g., oppose) each other (e.g., in the folded state of the electronic device), the impact-absorbing member and the protective member may be configured to contact each other.

An electronic device according to an embodiment of the disclosure may comprise a multi-foldable housing comprising a first housing, a second housing, and a third housing, a first hinge structure 240 disposed between the first housing and the second housing, a second hinge structure 250 rotatably connecting the second housing and the third housing, a flexible display 203 disposed on a front surface of the first housing, the second housing, and the third housing, a protective member 216; 226; 236 disposed on an edge area of the flexible display, a rear cover 300 disposed on a rear surface of the first housing and forming an exterior of the electronic device, and an impact-absorbing member 400 disposed on an edge area of the rear cover. When the rear cover and a portion of the flexible display are disposed to face (e.g., oppose) each other, the impact-absorbing member disposed on the rear cover and the protective member 236 disposed on the third housing may be configured to contact each other.

According to an embodiment, the protective member 216; 226; 236 is disposed along edges of the first housing 210, the second housing 220, and the third housing 230 to cover the edge area of the flexible display 203, and in a folding operation of the electronic device, the protective member is configured to prevent an external impact on the flexible display.

According to an embodiment, the impact-absorbing member 400 is disposed to cover an edge area of the rear cover 300, and in a folding operation of the electronic device, the impact-absorbing member 400 is configured to prevent an external impact on the rear cover.

According to an embodiment, when the rear cover 300 and the portion of the flexible display 203 are disposed to face (e.g., oppose) each other, the rear cover and the protective member 236 disposed on the third housing 230 may be disposed not to contact each other by the impact-absorbing member.

According to an embodiment, when the rear cover 300 and the portion of the flexible display 230 are disposed to face (e.g., oppose) each other, an impact applied to the protective member 236 disposed on the third housing 230 is configured to be mitigated by the impact-absorbing member.

According to an embodiment, the protective member may comprise a first protective member 216 covering a first edge portion of the flexible display 203 and disposed on the first housing 210, a second protective member 226 covering a second edge portion of the flexible display and disposed on the second housing 220, and a third protective member 236 covering a third edge portion of the flexible display and disposed on the third housing 230. In a folded state of the electronic device, the first protective member and the second protective member are configured to contact each other.

According to an embodiment, at least a portion of the impact-absorbing member may include a portion protruding further outward than one surface of the rear cover.

According to an embodiment, at least a portion of the impact-absorbing member may include a portion protruding further than a side wall of the first housing.

According to an embodiment, when the rear cover and a portion of the flexible display are disposed to face each other (e.g., in the folded state of the electronic device), the rear cover and the protective member may be disposed not to contact each other by the impact-absorbing member.

According to an embodiment, at least a portion of the impact-absorbing member may include a flat surface 425a capable of contacting the protective member, and a surface 425b, 425c inclined from one side of the flat surface toward the rear cover.

According to an embodiment, the impact-absorbing member may include a first impact-absorbing portion 410 disposed inside the first housing to support the impact-absorbing member, and a second impact-absorbing portion 420 extending from the first impact-absorbing portion and forming an outer appearance of the electronic device and disposed between the rear cover and the first housing.

According to an embodiment, the impact-absorbing member may be disposed in a closed loop shape along an edge portion of the rear cover.

According to an embodiment, the side wall of the first housing may include a first side surface parallel to the first in-folding hinge, a second side surface substantially perpendicular to the first side surface, and a third side parallel to the second side surface. The impact-absorbing member may be disposed adjacent to at least one of the second side surface and the third side surface of the first housing along the edge portion of the rear cover.

According to an embodiment, the impact-absorbing member may include an outer side facing the first housing and an inner side opposite the outer side. The impact-absorbing member may include a recess formed along the inner side, and the edge portion of the rear cover may be shaped to be inserted into the recess.

According to an embodiment, the electronic device may further comprise an adhesive member 500 disposed along an edge portion of the rear cover. The adhesive member may fix the rear cover to the first housing, and a portion of the impact-absorbing member may be disposed between the adhesive member and the side wall of the first housing.

According to an embodiment, the flexible display may include a first display area A1 supported by the first housing, a second display area A2 supported by the second housing, and a third display area A3 supported by the third housing. In the folded state of the electronic device, the second housing and the third housing may be spaced apart from each other with the first housing disposed therebetween, and the first display area A1 and the second display area A2 may be disposed to face (e.g., oppose) each other.

According to an embodiment, the second in-folding hinge may have a wider width than the first in-folding hinge, and in a fully folded state of the electronic device, an outer wall of the first housing may be positioned to face (e.g., oppose) the second in-folding hinge.

An electronic device according to an embodiment of the disclosure may comprise a multi-foldable housing 201. The multi-foldable housing may include a second housing 220, a first housing 210 rotatably connected to one side surface of the second housing, a third housing 230 rotatably connected to another side surface of the second housing, a first in-folding hinge 240 disposed between the second housing and the first housing, and a second in-folding hinge 250 disposed between the second housing and the third housing and having a width wider than the first in-folding hinge. The electronic device may comprise a flexible display 203 disposed toward a front surface of the first housing, the second housing, and the third housing, a protective member 236 covering an edge portion of the flexible display and disposed on the third housing, a rear cover 300 disposed toward a rear surface of the first housing and forming an exterior of the electronic device, and an impact-absorbing member 400 disposed adjacent to an edge portion of the rear cover. When the rear cover and a portion of the flexible display are disposed to face (e.g., oppose) each other (e.g., in the folded state of the electronic device), the rear cover and the protective member may be configured not to contact each other by the impact-absorbing member.

An electronic device according to an embodiment of the disclosure may comprise a multi-foldable housing comprising a first housing, a second housing, and a third housing, a first in-folding hinge 240 disposed between the first housing and the second housing and rotatably connecting the first housing and the second housing, a second in-folding hinge 250 disposed between the second housing and the third housing and rotatably connecting the second housing and the third housing, a flexible display 203 disposed on a front surface of the first housing, the second housing, and the third housing, a protective member 216; 226; 236 disposed on an edge area of the flexible display, a rear cover 300 disposed on a rear surface of the first housing and forming an exterior of the electronic device, and an impact-absorbing member 400 disposed adjacent to an edge portion of the rear cover. When the rear cover and a portion of the flexible display are disposed to face (e.g., oppose) each other, the rear cover and the protective member may be configured to contact each other by the impact-absorbing member.

According to an embodiment, the impact-absorbing member may be disposed on the first housing to cover an edge portion of the rear cover.

According to an embodiment, at least a portion of the impact-absorbing member may include a portion protruding further outward than one surface of the rear cover.

According to an embodiment, another portion of the impact-absorbing member may include a portion protruding further than a side wall 218 of the first housing.

According to an embodiment, a portion of the impact-absorbing member may be positioned on the protective member and, when the rear cover and a portion of the flexible display are disposed to face (e.g., oppose) each other (e.g., in the folded state of the electronic device), the impact-absorbing member and the rear cover may be configured to be contact each other.

According to an embodiment, a portion of the impact-absorbing member may include a first contact area 410c positioned on the protective member and extending in a first direction and a second contact area 420c extending in a direction substantially perpendicular to the first contact area.

According to an embodiment, when the rear cover and a portion of the flexible display are disposed to face (e.g., oppose) each other, the first contact area of the impact-absorbing member is configured to contact the rear cover, and the second contact area may be configured to contact the first housing.

An electronic device according to an embodiment of the disclosure may comprise a multi-foldable housing 201. The multi-foldable housing may include a second housing 220, a first housing 210 rotatably connected to one side surface of the second housing, a third housing 230 rotatably connected to another side surface of the second housing, a first in-folding hinge 240 disposed between the second housing and the first housing, and a second in-folding hinge 250 disposed between the second housing and the third housing and having a width wider than the first in-folding hinge. The electronic device may comprise a flexible display 203 disposed toward a front surface of the first housing, the second housing, and the third housing, a protective member 236 covering an edge portion of the flexible display and disposed on the third housing, and a rear cover 300 disposed toward a rear surface of the first housing and forming an exterior of the electronic device. When the rear cover and a portion of the flexible display are disposed to face (e.g., oppose) each other (e.g., in the folded state of the electronic device), a portion of the rear cover and the protective member may be configured to contact each other.

An electronic device according to an embodiment of the disclosure may comprise a multi-foldable housing comprising a first housing, a second housing, and a third housing, a first in-folding hinge 240 disposed between the first housing and the second housing and rotatably connecting the first housing and the second housing, a second in-folding hinge 250 disposed between the second housing and the third housing and rotatably connecting the second housing and the third housing, a flexible display 203 disposed on a front surface of the first housing, the second housing, and the third housing, a protective member 216; 226; 236 disposed on an edge area of the flexible display, a rear cover 300 disposed on a rear surface of the first housing and forming an exterior of the electronic device, and an impact-absorbing member 400 disposed adjacent to an edge portion of the rear cover. When the rear cover and a portion of the flexible display are disposed to face (e.g., oppose) each other, a portion of the rear cover and the protective member may be configured to contact each other.

According to an embodiment, the rear cover may include an elastic material or an injection-molded material.

According to an embodiment, the rear cover may include a first area 305 having a first thickness t1 and a second area 306; 307 having a second thickness T2 larger than the first thickness, and a portion of the rear cover may be the second area and may be formed of an edge portion of the rear cover.

According to an embodiment, the second thickness of the second area of the rear cover may include an inclined surface that sequentially reduces in a length direction of the rear cover.

## Claims

1. An electronic device (101 - Figure 2a; 2b; 3a; 3b; 3c; 3d; 4; 5) comprising:
a multi-foldable housing (201 - Figure 2a; 2b; 3a; 3b; 3c; 3d; 4; 5) comprising a first housing (210 - Figure 2a; 2b; 3a; 3b; 3c; 3d; 4; 5), a second housing (220 - Figure 2a; 2b; 3a; 3b; 3c; 3d; 4; 5), and a third housing(230 - Figure 2a; 2b; 3a; 3b; 3c; 3d; 4; 5);
a first hinge structure (240 - Figure 2a; 2b; 3a; 3b; 3c; 3d; 4; 5) rotatably connecting the first housing and the second housing;
a second hinge structure (250 - Figure 2a; 2b; 3a; 3b; 3c; 3d; 4; 5) rotatably connecting the second housing and the third housing;
a flexible display (203 - Figure 2a; 2b; 3a; 3b; 3c; 3d; 4; 5) disposed on a front surface of the first housing, the second housing, and the third housing;
a protective member (216; 226; 236 - Figure 2a; 2b; 4; 5) disposed on an edge area of the flexible display;
a rear cover (300 - Figure 6; 7; 8; 9; 10; 11) disposed on a rear surface of the first housing and forming an exterior of the electronic device; and
an impact-absorbing member (400 - Figure 6; 7; 8; 9; 10; 11) disposed on an edge area of the rear cover;
wherein when the rear cover and a portion of the flexible display are disposed to face each other, the impact-absorbing member disposed on the rear cover and the protective member (236) disposed on the third housing are configured to contact each other.

2. The electronic device of claim 1,
wherein the protective member (216; 226; 236) is disposed along edges of the first housing (210), the second housing (220), and the third housing (230) to cover the edge area of the flexible display (203), and
wherein in a folding operation of the electronic device, the protective member is configured to prevent an external impact on the flexible display.

3. The electronic device of claim 1 or 2,
wherein the impact-absorbing member (400) is disposed to cover an edge area of the rear cover (300), and
wherein in a folding operation of the electronic device, the impact-absorbing member (400) is configured to prevent an external impact on the rear cover.

4. The electronic device of any one of claims 1 to 3,
wherein when the rear cover (300) and the portion of the flexible display (203) are disposed to face each other, the rear cover and the protective member (236) disposed on the third housing (230) are disposed not to contact each other by the impact-absorbing member (400).

5. The electronic device of any one of claims 1 to 4,
wherein when the rear cover (300) and the portion of the flexible display (203) are disposed to face each other, wherein the impact-absorbing member (400) is configured to mitigate an impact applied to the protective member (236) disposed on the third housing (230).

6. The electronic device of any one of claims 1 to 5, wherein the protective member comprises:
a first protective member (216) covering a first edge portion of the flexible display (203) and disposed on the first housing (210);
a second protective member (226) covering a second edge portion of the flexible display and disposed on the second housing (220); and
a third protective member (236) covering a third edge portion of the flexible display and disposed on the third housing (230), and
wherein in a folded state of the electronic device, the first protective member and the second protective member are configured to contact each other.

7. The electronic device of any one of claims 1 to 6,
wherein at least a portion of the impact-absorbing member (400) includes a portion protruding further outward than one surface of the rear cover (300).

8. The electronic device of any one of claims 1 to 7,
wherein at least a portion of the impact-absorbing member (400) includes a portion protruding further than a side wall of the first housing (210).

9. The electronic device of any one of claims 1 to 8,
wherein at least a portion of the impact-absorbing member (400) includes a flat surface (425a) capable of contacting the protective member (236), and a surface (425b; 425c) inclined from one side of the flat surface toward the rear cover (300).

10. The electronic device of any one of claims 1 to 9,
wherein the impact-absorbing member (400) includes a first impact-absorbing portion (410) disposed inside the first housing (210) to support the impact-absorbing member, and a second impact-absorbing portion (420) extending from the first impact-absorbing portion and forming an outer appearance of the electronic device and disposed between the rear cover (300) and the first housing.

11. The electronic device of any one of claims 1 to 10,
wherein the impact-absorbing member (400) is formed as a closed loop shape along an edge portion of the rear cover (300).

12. The electronic device of any one of claims 1 to 11,
wherein a side wall of the first housing (210) includes a first side surface parallel to the first hinge structure (240), a second side surface substantially perpendicular to the first side surface, and a third side parallel to the second side surface, and
wherein the impact-absorbing member (400) is disposed adjacent to at least one of the second side surface and the third side surface of the first housing along the edge portion of the rear cover (300).

13. The electronic device of any one of claims 1 to 12,
wherein the impact-absorbing member (400) includes an outer side facing the first housing (210) and an inner side opposite the outer side, and
wherein the impact-absorbing member includes a recess formed along the inner side, and an edge portion of the rear cover (300) is shaped to be inserted into the recess.

14. The electronic device of any one of claims 1 to 13, further comprising
an adhesive member (500) disposed along an edge portion of the rear cover (300),
wherein the adhesive member fixes the rear cover to the first housing (210), and a portion of the impact-absorbing member (400) is disposed between the adhesive member and a side wall of the first housing.

15. The electronic device of any one of claims 1 to 14,
wherein the flexible display (203) includes a first display area (A1) supported by the first housing (210), a second display area (A2) supported by the second housing (220), and a third display area (A3) supported by the third housing (230), and
wherein in the folded state of the electronic device, the second housing and the third housing are spaced apart from each other with the first housing disposed therebetween, and the first display area (A1) and the second display area (A2) are disposed to face each other.
